# EUROPEAN PATENT APPLICATION

(11) **EP 4 366 430 A1**
(43) Date of publication of application: **08.05.2024**
(21) Application number: 22845240.5
(22) Date of filing: 15.07.2022
(51) Int. Cl.: H04W 72/12, H04L 1/18

(54) **COMMUNICATION METHOD AND APPARATUS**

(30) Priority: 23.07.2021 CN 202110839073
(71) Applicant: Huawei Technologies Co., Ltd., Longgang Shenzhen, Guangdong 518129 (CN)
(72) Inventor: LI, Jun, Shenzhen, Guangdong 518129 (CN); JIAO, Shurong, Shenzhen, Guangdong 518129 (CN)
(74) Representative: Pfenning, Meinig & Partner mbB
(86) International application number: PCT/CN2022/106030
(87) International publication number: WO 2023/001075

(57) **Abstract**

A communication method and apparatus are provided, to ensure in-order data scheduling in a scenario in which a PUCCH is transmitted in a plurality of cells. A network device sends first scheduling information and second scheduling information to a terminal device, where the first scheduling information is used to schedule a first PDSCH and a first PUCCH, the second scheduling information is used to schedule a second PDSCH and a second PUCCH, a time domain resource of the second PDSCH is located after that of the first PDSCH, a PUCCH is used to carry HARQ feedback information of a PDSCH, and the first PUCCH and the second PUCCH are located in different cells. The following scheduling result is not expected: The second PUCCH is located before the first PUCCH; or the first PUCCH and the second PUCCH are located in different reference time units, and the second PUCCH is located before the first PUCCH; or the first PUCCH and the second PUCCH are located in one reference time unit.

## Description

### CROSS-REFERENCE TO RELATED APPLICATIONS

This application claims priority to Chinese Patent Application No. 202110839073.X, filed with the China National Intellectual Property Administration on July 23, 2021 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Data transmission reliability is a key performance indicator in a communication system. In the communication system, a network device sends data to a terminal device, and the terminal device usually feeds back hybrid automatic repeat request (hybrid automatic repeat request, HARQ) information to the network device. The HARQ information may also be referred to as HARQ feedback information. The network device determines, based on the HARQ feedback information sent by the terminal device, whether the data is successfully transmitted, to improve the data transmission reliability. Generally, a physical uplink control channel (physical uplink control channel, PUCCH) is used to carry the HARQ feedback information.

In the conventional technology, a PUCCH group (PUCCH group) is defined, where the PUCCH group corresponds to one or more cells. It may be considered that the one or more cells are packed together. When the HARQ feedback information is transmitted, the PUCCH is allowed to be transmitted only in one of a plurality of cells corresponding to the PUCCH group. However, the PUCCH is transmitted only in an uplink slot or a flexible slot of the cell, and the PUCCH cannot be transmitted in a downlink slot of the cell. Consequently, a feedback delay of the HARQ feedback information is increased. Based on this, to reduce the feedback delay of the HARQ feedback information, a quantity of cells that are in the PUCCH group and that are for transmitting the PUCCH may be increased. For example, two cells are used for transmitting the PUCCH. In this way, in a downlink slot of one of the cells, the PUCCH is sent in an uplink slot of the other cell, to increase a sending opportunity of the PUCCH and reduce the feedback delay of the HARQ feedback information.

When the PUCCH of the HARQ-ACK information is allowed to be transmitted in the plurality of cells, data scheduling may be out-of-order, resulting in processing complexity for the terminal. When the PUCCH of the HARQ-ACK information is allowed to be transmitted in the plurality of cells, how to ensure in-order data scheduling is a problem that needs to be considered.

### SUMMARY

Embodiments of this application provide a communication method and apparatus, to ensure in-order data scheduling in a scenario in which a PUCCH carrying HARQ-ACK information is transmitted in a plurality of cells.

According to a first aspect, a communication method is provided. The method may be performed by a terminal device, or may be performed by a component of the terminal device. The method may be implemented by using the following steps: receiving first scheduling information and second scheduling information from a network device, where the first scheduling information indicates a time domain resource of a first physical downlink shared channel PDSCH and a time domain resource of a first physical uplink control channel PUCCH, the second scheduling information indicates a time domain resource of a second PDSCH and a time domain resource of a second PUCCH, the time domain resource of the second PDSCH is located after the time domain resource of the first PDSCH, the first PUCCH is used to carry hybrid automatic repeat request-acknowledgment HARQ feedback information of the first PDSCH, the second PUCCH is used to carry HARQ feedback information of the second PDSCH, the first PUCCH is located in a first cell, and the second PUCCH is located in a second cell; and determining that scheduling is incorrect when a condition is met, where the condition is: (1) the time domain resource of the second PUCCH is located before the time domain resource of the first PUCCH; or (2) the time domain resource of the first PUCCH and the time domain resource of the second PUCCH are located in different reference time units, and the time domain resource of the second PUCCH is located before the time domain resource of the first PUCCH; or (3) the time domain resource of the first PUCCH and the time domain resource of the second PUCCH are located in one reference time unit, where the length of the reference time unit is preset or indicated by the network device. In a scenario in which a PUCCH carrying the HARQ-ACK information is transmitted in a plurality of cells, whether data scheduling is in-order scheduling can be determined based on the specified conditions. When the specified condition is met, it is determined that the scheduling is incorrect, and when the specified condition is not met, it is determined that the scheduling is in-order scheduling, that is, the scheduling is correct. The network device and the terminal device may avoid out-of-order data scheduling based on the specified condition, to ensure the in-order data scheduling. The condition (1) only needs to be determined based on a location relationship between the time domain resource of the second PUCCH and the time domain resource of the first PUCCH, and whether the two time domain resources are in a same time unit does not need to be determined. In this way, determining logic of the terminal device is relatively simple and easy to implement. The condition (2) and the condition (3) are determined by using a reference time unit, so that whether the scheduling is out-of-order can be determined in a scenario in which time units of a plurality of cells for transmitting the PUCCH have different lengths.

In a possible design, the reference time unit is a time unit having a smallest length in M time units corresponding to M cells included in a cell group, where the cell group includes the first cell and the second cell, each cell included in the cell group is a cell allowed for transmitting the PUCCH, M is a positive integer, and M is greater than 1. Optionally, if the time units corresponding to the M cells include a same quantity of symbols, the reference time unit may alternatively be a cell unit having a largest subcarrier spacing in the M cells. When the time domain resource of the first PUCCH and the time domain resource of the second PUCCH are located in different reference time units, and the time domain resource of the first PUCCH is located before the time domain resource of the second PUCCH, the scheduling may be normal. The cell in which the PUCCH is transmitted may be switched by using a reference time unit as a granularity. The reference time unit having a shorter length indicates more sending opportunities of the PUCCH and a lower feedback delay of the HARQ-ACK information.

In a possible design, the reference time unit is a time unit having a largest length in M time units corresponding to M cells included in a cell group, where the cell group includes the first cell and the second cell, each cell included in the cell group is a cell allowed for transmitting the PUCCH, and M is a positive integer. The cell in which the PUCCH is transmitted may be switched by using a reference time unit as a granularity. The reference time unit having a larger length indicates a larger granularity for switching the cell in which the PUCCH is transmitted, and lower implementation complexity of the terminal device.

In a possible design, the method further includes: When the time domain resource of the first PUCCH and the time domain resource of the second PUCCH are located in a same reference time unit, using one of the first PUCCH and the second PUCCH that is scheduled later to carry the HARQ feedback information of the first PDSCH and the HARQ feedback information of the second PDSCH. When there are a plurality of PUCCHs in one reference time unit, an out-of-order phenomenon can be avoided when only one PUCCH is transmitted, to ensure smooth scheduling.

In a possible design, if a start symbol and an end symbol of a time domain resource of a third PUCCH are located in two different reference time units, a reference time unit in which the start symbol of the time domain resource of the third PUCCH is located is used as a reference time unit in which the time domain resource of the third PUCCH is located; or a reference time unit in which the end symbol of the time domain resource of the third PUCCH is located is used as a reference time unit in which the time domain resource of the third PUCCH is located, where the third PUCCH is the first PUCCH or the second PUCCH.

In a possible design, if a start symbol and an end symbol of the time domain resource of the first PUCCH are located in different reference time units, and/or if a start symbol and an end symbol of the time domain resource of the second PUCCH are located in different reference time units, it is determined that the scheduling is incorrect. In this way, according to the design, the time domain resource of the PUCCH is not allowed to cross two reference time units. This facilitates the determining of the foregoing conditions.

In a possible design, PUCCH quantity information is sent to the network device, where the PUCCH quantity information indicates a maximum quantity of PUCCHs that are sent in a reference time unit and that are used to carry the HARQ-ACK information. In this way, a quantity of PUCCHs sent in one reference time unit may be flexibly set. When a transmission opportunity of the PUCCH needs to be increased, a quantity of PUCCHs that are transmitted may be increased. When a relatively small quantity of PUCCHs are set, for example, one PUCCH, transmission resources can be saved, and the implementation complexity of the terminal device can be reduced.

According to a second aspect, a communication method is provided. The method may be performed by a network device, or may be performed by a component of the network device. The method may be implemented by using the following steps: generating first scheduling information and second scheduling information, and sending the first scheduling information and the second scheduling information to a terminal device. For descriptions of the first scheduling information and the second scheduling information, refer to the first aspect. Details are not described herein again. When generating and sending the first scheduling information and the second scheduling information, the network device needs to perform scheduling according to a rule. The rule indicates that a scheduling result that meets a condition is not allowed. For the condition herein, refer to the descriptions of the "condition" in the first aspect.

For each possible design of the second aspect, refer to descriptions of each possible design of the first aspect.

According to a third aspect, a communication apparatus is provided. The apparatus may be a terminal device, or may be a component located in the terminal device, (for example, a chip, or a chip system, or a circuit). The apparatus has a function of implementing the method in any one of the first aspect or the possible designs of the first aspect. The function may be implemented by hardware, or may be implemented by the hardware executing corresponding software. The hardware or the software includes one or more modules corresponding to the foregoing function. In a design, the apparatus may include a processing unit and a transceiver unit. For example, the transceiver unit is configured to receive first scheduling information and second scheduling information from the network device. The processing unit is configured to determine that scheduling is incorrect when a condition is met. For more detailed descriptions of the processing unit and the transceiver unit, refer to the related descriptions in the first aspect. For beneficial effects of the third aspect and each possible design, refer to descriptions of a corresponding part in the first aspect.

According to a fourth aspect, a communication apparatus is provided. The apparatus may be a network device, or may be a component located in the network device (for example, a chip, a chip system, or a circuit). The apparatus has a function of implementing the method in any one of the second aspect or the possible designs of the second aspect. The function may be implemented by hardware, or may be implemented by the hardware executing corresponding software. The hardware or the software includes one or more modules corresponding to the foregoing function. In a design, the apparatus may include a processing unit and a transceiver unit. For example, the transceiver unit is configured to send first scheduling information and second scheduling information to a terminal device. The processing unit is configured to generate the first scheduling information and the second scheduling information. For more detailed descriptions of the processing unit and the transceiver unit, refer to the related descriptions in the second aspect. For beneficial effects of the fourth aspect and the possible designs, refer to descriptions in corresponding parts of the second aspect.

According to a fifth aspect, an embodiment of this application provides a communication apparatus. The communication apparatus includes an interface circuit and a processor, where the processor and the interface circuit are coupled to each other. The processor is configured to implement the method described in the first aspect or the possible designs of the first aspect by using a logic circuit or by executing code instructions. The interface circuit is configured to: receive a signal from a communication apparatus other than the communication apparatus, and transmit the signal to the processor, or send a signal from the processor to a communication apparatus other than the communication apparatus. It may be understood that the interface circuit may be a transceiver or an input/output interface.

Optionally, the communication apparatus may further include a memory, configured to store instructions executed by the processor, or store input data needed by the processor to run the instructions, or store data generated after the processor runs the instructions. The memory may be a physically independent unit, or may be coupled to the processor, or the processor includes the memory.

According to a sixth aspect, an embodiment of this application provides a communication apparatus. The communication apparatus includes an interface circuit and a processor, where the processor and the interface circuit are coupled to each other. The processor is configured to implement the method described in the second aspect or the possible designs of the second aspect by using a logic circuit or by executing code instructions. The interface circuit is configured to: receive a signal from a communication apparatus other than the communication apparatus, and transmit the signal to the processor, or send a signal from the processor to a communication apparatus other than the communication apparatus. It may be understood that the interface circuit may be a transceiver or an input/output interface.

Optionally, the communication apparatus may further include a memory, configured to store instructions executed by the processor, or store input data needed by the processor to run the instructions, or store data generated after the processor runs the instructions. The memory may be a physically independent unit, or may be coupled to the processor, or the processor includes the memory.

According to a seventh aspect, an embodiment of this application provides a computer-readable storage medium. The computer-readable storage medium stores a computer program or readable instructions, and when the computer program is executed or the readable instructions are executed by a communication apparatus, the method according to the foregoing aspects or the possible designs of the aspects is enabled to be performed.

According to an eighth aspect, an embodiment of this application provides a chip system. The chip system includes a processor, and may further include a memory. The memory is configured to store a program, instructions, or code. The processor is configured to execute the program, the instructions, or the code stored in the memory, to implement the method in the foregoing aspects or the possible designs of the aspects. The chip system may include a chip, or may include a chip and another discrete component.

According to a ninth aspect, a computer program product including instructions is provided. When the computer program product is executed by a communication apparatus, the method according to the first aspect or the possible designs of the aspects is enabled to be performed.

### BRIEF DESCRIPTION OF DRAWINGS

FIG. 1 is a schematic diagram of an architecture of a communication system according to an embodiment of this application;
FIG. 2 is a first schematic diagram of PUCCH transmission in a scenario 1 according to an embodiment of this application;
FIG. 3 is a second schematic diagram of PUCCH transmission in a scenario 1 according to an embodiment of this application;
FIG. 4 is a third schematic diagram of PUCCH transmission in a scenario 1 according to an embodiment of this application;
FIG. 5 is a fourth schematic diagram of PUCCH transmission in a scenario 1 according to an embodiment of this application;
FIG. 6 is a schematic flowchart of a communication method according to an embodiment of this application;
FIG. 7 is a first schematic scheduling diagram according to an embodiment of this application;
FIG. 8 is a second schematic scheduling diagram according to an embodiment of this application;
FIG. 9 is a third schematic scheduling diagram according to an embodiment of this application;
FIG. 10 is a fourth schematic scheduling diagram according to an embodiment of this application;
FIG. 11 is a fifth schematic scheduling diagram according to an embodiment of this application;
FIG. 12 is a sixth schematic scheduling diagram according to an embodiment of this application;
FIG. 13 is a seventh schematic scheduling diagram according to an embodiment of this application;
FIG. 14 is an eighth schematic scheduling diagram according to an embodiment of this application;
FIG. 15 is a ninth schematic scheduling diagram according to an embodiment of this application;
FIG. 16 is a tenth schematic scheduling diagram according to an embodiment of this application;
FIG. 17 is an eleventh schematic scheduling diagram according to an embodiment of this application;
FIG. 18 is a twelfth schematic scheduling diagram according to an embodiment of this application;
FIG. 19 is a thirteenth schematic scheduling diagram according to an embodiment of this application;
FIG. 20 is a fourteenth schematic scheduling diagram according to an embodiment of this application;
FIG. 21 is a fifteenth schematic scheduling diagram according to an embodiment of this application;
FIG. 22 is a sixteenth schematic scheduling diagram according to an embodiment of this application;
FIG. 23 is a seventeenth schematic scheduling diagram according to an embodiment of this application;
FIG. 24 is an eighteenth schematic scheduling diagram according to an embodiment of this application;
FIG. 25 is a nineteenth schematic scheduling diagram according to an embodiment of this application;
FIG. 26 is a twentieth schematic scheduling diagram according to an embodiment of this application;
FIG. 27 is a first schematic diagram of a structure of a communication apparatus according to an embodiment of this application; and
FIG. 28 is a second schematic diagram of a structure of a communication apparatus according to an embodiment of this application.

### DESCRIPTION OF EMBODIMENTS

Embodiments of this application provide a communication method and apparatus, to ensure in-order data scheduling in a scenario in which a PUCCH is transmitted in a plurality of cells. The method and the apparatus are based on a same or a similar technical concept. The method and the apparatus have similar principles for resolving problems. Therefore, for implementations of the apparatus and the method, refer to each other. Details are not repeated herein.

The communication method provided in embodiments of this application may be applied to a fourth generation (4th generation, 4G) communication system, for example, long term evolution (long term evolution, LTE), or may be applied to a fifth generation (5th generation, 5G) communication system, for example, 5G new radio (new radio, NR), or may be applied to various future evolved communication systems, for example, a sixth generation (6th generation, 6G) communication system or a space-air-ocean-ground integrated communication system. It may be understood that a system architecture and an application scenario described in embodiments of this application are intended to describe technical solutions in embodiments of this application more clearly, and do not constitute any limitation on the technical solutions provided in embodiments of this application.

The following describes in detail embodiments of this application with reference to accompanying drawings.

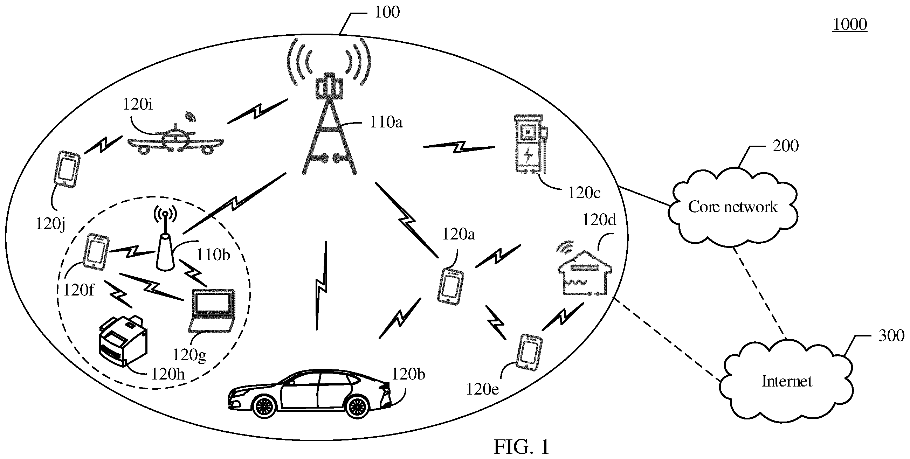

FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to a core network in a wireless or wired manner. The core network device and the radio access network device may be independent and different physical devices, or a function of the core network device and a logical function of the radio access network device may be integrated into a same physical device, or a part of function of the core network device and a part of function of the radio access network device may be integrated into one physical device. The terminal and the terminal, and the radio access network device and the radio access network device may be connected to each other in the wireless manner. FIG. 1 is merely a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a fifth generation (5th generation, 5G) mobile communication system, a next generation NodeB in a sixth generation (6th generation, 6G) mobile communication system, a base station in a future mobile communication system, an access node in a Wi-Fi system, or the like, or may be a module or a unit that implements some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement functions of a part or all of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor station (for example, 110b in FIG. 1), or may be a relay node, a donor node. A specific technology and a specific device form that are used by the radio access network device are not limited in embodiments of this application. For ease of description, the following describes an example in which the base station is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, and the like. The terminal may be a mobile phone, a tablet computer, a computer with a wireless transceiver function, a wearable device, a vehicle, an unmanned aerial vehicle, a helicopter, an airplane, a ship, a robot, a robotic arm, a smart home device, and the like. A technology and a specific device form used by the terminal are not limited in embodiments of this application.

The base station and the terminal may be at a fixed location or may be movable. The base station and the terminal may be deployed on the land, including indoor or outdoor, may be handheld or vehicle-mounted; may be deployed on a water surface; or may be deployed on aircraft, a balloon, or a satellite in the air. Application scenarios of the base station and the terminal are not limited in the embodiments of this application.

A role of the base station and the terminal may be opposite, for example, a helicopter or an unmanned aerial vehicle 120i in FIG. 1 may be configured as a mobile base station, for those terminals 120j accessing the radio access network 100 through the unmanned aerial vehicle 120i, the terminal 120i is a base station. However, for a base station 110a, 120i is a terminal. To be specific, the base station 110a and the unmanned aerial vehicle 120i communicate with each other by using a wireless air interface protocol. Certainly, 110a and 120i may also communicate with each other by using an interface protocol between the base stations. In this case, compared with 110a, 120i is also a base station. Therefore, both the base station and the terminal may be collectively referred to as communication apparatuses. 110a and 110b in FIG. 1 may be referred to as communication apparatuses having a base station function, and 120a to 120j in FIG. 1 may be referred to as communication apparatuses having a terminal function.

The base station and the terminal, the base station and the base station, the terminal and the terminal may communicate with each other by using a licensed spectrum, or may communicate with each other by using an unlicensed spectrum, or may communicate with each other by using both the licensed spectrum and the unlicensed spectrum; may communicate with each other by using a spectrum below 6 gigahertz (gigahertz, GHz), or may communicate with each other by using a spectrum above 6 GHz, or may communicate with each other by using the spectrum below 6 GHz and the spectrum above 6 GHz. A spectrum resource used for wireless communication is not limited in embodiments of this application.

In embodiments of this application, a function of the base station may also be performed by a module (for example, a chip) in the base station, or may be performed by a control subsystem including the function of the base station. The control subsystem including the function of the base station may be a control center in the foregoing application scenarios such as a smart grid, industrial control, intelligent transportation, and a smart city. A function of the terminal may also be performed by a module (for example, a chip or a modem) in the terminal, or may be performed by an apparatus including the function of the terminal. When a specific communication method is described in this application, an example in which a device implementing the function of the base station is a network device is used for description, and an example in which a device implementing the function of the terminal is a terminal device is used for description.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device.

The foregoing content describes a system architecture and a possible application scenario of embodiments of this application. To better understand the technical solutions in embodiments of this application, the following describes a concept of a PUCCH group.

The PUCCH group is a group of cells, and one PUCCH group may correspond to one or more cells. The cell corresponding to the PUCCH group may be a cell serving the terminal device. For example, in a carrier aggregation application scenario or a dual connectivity application scenario, there may be a plurality of cells serving the terminal device. One PUCCH group corresponds to L cells, where L is a positive integer. M cells of the L cells may be used for transmitting a PUCCH, and other (L-M) cells of the L cells are not allowed for transmitting the PUCCH. The M cells allowed for transmitting the PUCCH may be defined as one cell group. Each cell included in the cell group is a cell allowed for transmitting the PUCCH. The network device configures information about the PUCCH group for the terminal device. The information about the PUCCH group may include a cell in the PUCCH group and a cell in the cell group allowed for transmitting the PUCCH. For example, the network device configures eight cells for the terminal device, where the eight cells are serving cells of the terminal device. The network device configures one PUCCH group for the terminal device. The PUCCH group corresponds to the eight cells. Two cells are allowed for transmitting the PUCCH, the two cells form the cell group, and remaining six cells are not allowed for transmitting the PUCCH. The terminal device may receive downlink data of the eight cells corresponding to the PUCCH group. The terminal device needs to perform HARQ feedback on the received downlink data, and the terminal device can transmit HARQ feedback information only in the cells allowed for transmitting the PUCCH. To be specific, HARQ feedback information of the remaining six cells needs to be transmitted in the two cells allowed for transmitting the PUCCH.

The network device may configure a maximum of two PUCCH groups for the terminal device, and the two PUCCH groups may include a primary PUCCH group and a secondary PUCCH group. For example, the network device configures eight cells for the terminal device, which are denoted as a cell 1, a cell 2, ..., and a cell 8. The eight cells are the serving cells of the terminal device. The network device configures two PUCCH groups for the terminal device, which are denoted as a PUCCH group 1 and a PUCCH group 2. The PUCCH group 1 corresponds to the cell 1 to the cell 4. For example, the cell 1 in the PUCCH group 1 is allowed for transmitting the PUCCH. The terminal device may receive downlink data of the cell 1 to the cell 4, and transmit HARQ feedback information of the downlink data of the cell 1 to the cell 4 only in the cell 1. The PUCCH group 2 corresponds to the cell 5 to the cell 8. For example, the cell 5 in the PUCCH group 2 is allowed for transmitting the PUCCH. The terminal device may receive downlink data of the cell 5 to the cell 8, and transmit HARQ feedback information of the downlink data of the cell 5 to the cell 8 only in the cell 5.

In the carrier aggregation scenario, the terminal device may access a plurality of cells in a same network device. The plurality of cells may include a primary cell (PCell) and a secondary cell (SCell). For example, the primary cell and one secondary cell may be set as cells allowed for transmitting the PUCCH. The application scenario of the PUCCH group is merely used as an example for description, and does not constitute a limitation on an application scenario that can be used in embodiments of this application. The solution provided in this application may be applied to an application scenario of a PUCCH group formed by a plurality of other cells.

In embodiments of this application, the HARQ feedback information is carried by the PUCCH. Optionally, the PUCCH may further carry other uplink control information, for example, a scheduling request (scheduling request, SR) or channel state information (channel state information, CSI).

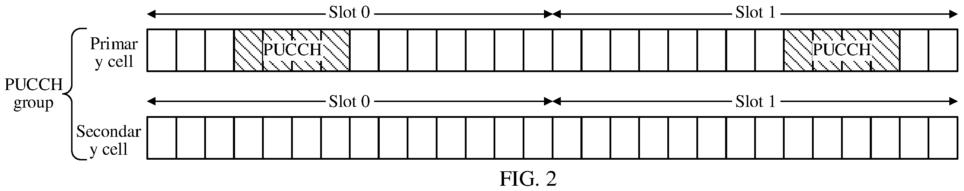

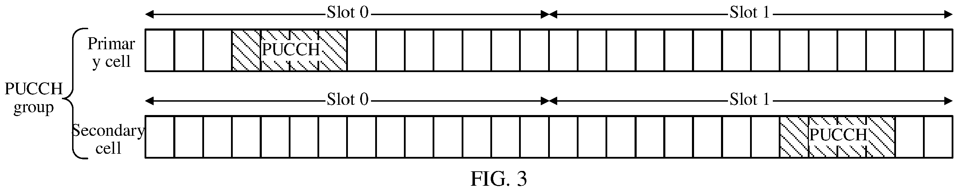

In a scenario 1, a cell group allowed for transmitting the PUCCH may include only one cell, to be specific, the PUCCH is allowed to be sent only in one cell. For example, as shown in FIG. 2, in the carrier aggregation scenario, the PUCCH group includes one primary cell and one secondary cell, and the PUCCH is allowed to be sent only in the primary cell. In addition, at most one PUCCH carrying the HARQ-ACK is transmitted in one slot. In the example shown in FIG. 2, the PUCCH can be transmitted only in the primary cell, and only one PUCCH can be transmitted in one slot of the primary cell. Considering that one slot of the primary cell may be a downlink slot, the PUCCH cannot be sent in the downlink slot, and the PUCCH can be sent only in a next uplink slot, which results in a higher feedback delay of the HARQ-ACK information, to reduce the feedback delay of the HARQ-ACK information, specifications may be changed based on the solution of the scenario 1. To be specific, a quantity of cells that are for transmitting the PUCCH and that are in the PUCCH group is increased, and two or more cells are allowed for transmitting the PUCCH. For example, as shown in FIG. 3, in the carrier aggregation scenario, the PUCCH group includes one primary cell and one secondary cell, and the PUCCH is allowed to be sent in the primary cell and the secondary cell. According to the solution of the scenario 1, the PUCCH is allowed to be sent only in one cell (for example, the primary cell). It is assumed that a slot 1 of the primary cell is a downlink lot, the PUCCH cannot be sent in the slot 1 of the primary cell. When the PUCCH is allowed to be sent in the primary cell and the secondary cell, if a slot 1 of the secondary cell is an uplink slot, the terminal device may send the PUCCH in the slot 1 of the secondary cell that is aligned with the slot 1 of the primary cell. In this way, the feedback delay of the HARQ-ACK information is reduced.

In one PUCCH group, when the PUCCH is allowed to be sent in a plurality of cells, the sending of the PUCCH may be switched among the plurality of cells, to increase sending opportunities of the PUCCH and reduce the feedback delay of the HARQ-ACK information.

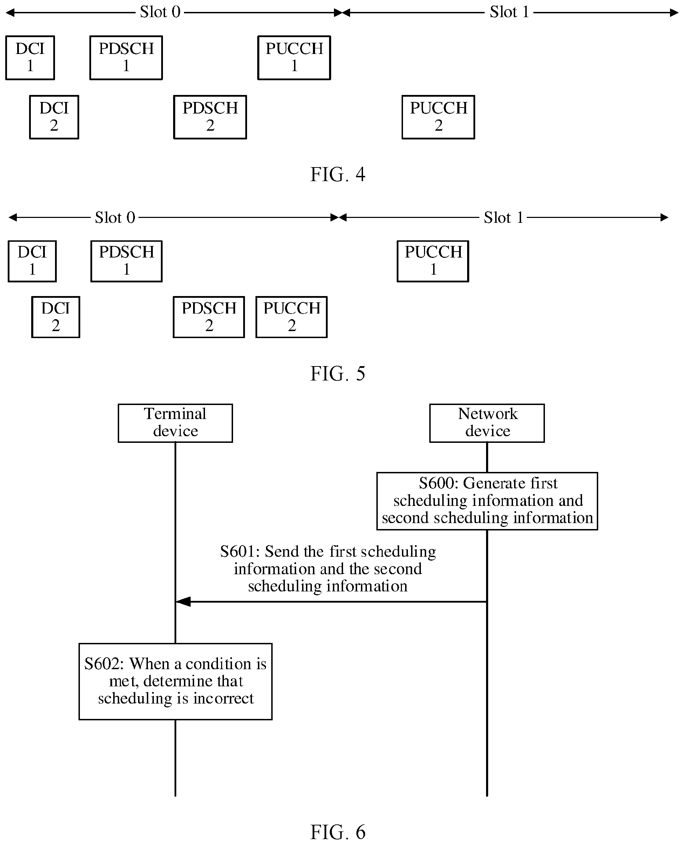

Data needs to be scheduled in order, that is, data cannot be scheduled out of order. In-order data scheduling is an important prerequisite for the terminal to correctly receive and parse the data. Scheduling of a physical downlink shared channel (physical downlink shared channel, PDSCH) 1 and a PDSCH 2 is used as an example. The PUCCH 1 is used to carry HARQ feedback information of the PDSCH 1, and the PUCCH 2 is used to carry HARQ feedback information of the PDSCH 2. Based on the solution of the foregoing scenario 1, to be specific, the PUCCH is allowed to be sent only in one cell, the network device needs to schedule the data in order, that is, to ensure the in-order data scheduling. FIG. 4 is an example of scheduling data in a normal order. The network device indicates a time domain resource of the PDSCH 1 and a time domain resource of the PUCCH 1 by using DCI 1, and indicates a time domain resource of the PDSCH 2 and a time domain resource of the PUCCH 2 by using DCI 2. The time domain resource of the PDSCH 2 is located after the time domain resource of the PDSCH 1, and the time domain resource of the PUCCH 2 is located after the time domain resource of the PUCCH 1. In this case, the terminal device may receive the PDSCH 1 and the PDSCH 2 in order, and send the PUCCH 1 and the PUCCH 2 in order. In this case, implementation complexity of the UE is low, and normal data sending and receiving can be ensured.

If the data scheduling is not performed in order, the scheduling is out of order. Based on the solution in the foregoing scenario 1, the out-of-order may be defined as follows: The time domain resource of the PDSCH 2 is located after the time domain resource of the PDSCH 1, the time domain resource of the PUCCH 2 is located before the time domain resource of the PUCCH 1, and the time domain resource of the PUCCH 2 and the time domain resource of the PUCCH 1 are located in different slots. As shown in FIG. 5, the network device indicates the time domain resource of the PDSCH 1 and the time domain resource of the PUCCH 1 by using the DCI 1, and indicates the time domain resource of the PDSCH 2 and the time domain resource of the PUCCH 2 by using the DCI 2. The time domain resource of the PDSCH 2 is located after the time domain resource of the PDSCH 1. However, the time domain resource of the PUCCH 2 is located before the time domain resource of the PUCCH 1, and the time domain resource of the PUCCH 2 and the time domain resource of the PUCCH 1 are located in different slots. In this case, the out-of-order is caused. The foregoing result of scheduling the PDSCH 1 and the PDSCH 2 by the network device should not include out-of-order scheduling, and the terminal device does not expect to be scheduled out of order. Once out-of-order scheduling occurs, when receiving the PDSCH 1 and preparing the PUCCH 1, the terminal device also needs to receive the PDSCH 2 and prepare the PUCCH 2, resulting in complex implementation of the terminal device.

The foregoing definitions of the data scheduling and out-of-order are based on the scenario 1, to be specific, the PUCCH can be sent only in one cell. When a plurality of cells in a PUCCH group can be used for transmitting the PUCCH, how to schedule data and how to define out-of-order are problems that need to be considered.

When a plurality of cells in a PUCCH group can be used for transmitting the PUCCH, because subcarrier spacings of different cells may be different, slot lengths of different cells may be different. Some cells may use a subslot as a unit for transmitting the PUCCH. To be specific, at most one PUCCH carrying the HARQ-ACK is transmitted in one subslot. For ease of description, in embodiments of this application, a time unit may indicate a unit for transmitting the PUCCH, and in one time unit of one cell, only a maximum of one PUCCH for carrying the HARQ-ACK information can be sent. The time unit may be a slot or a subslot. The length of one slot may be 14 orthogonal frequency division multiplexing (orthogonal frequency division multiplexing, OFDM) symbols, and the length of one subslot may be seven OFDM symbols or two OFDM symbols. The OFDM symbol may also be referred to as a symbol for short.

When a plurality of cells in a PUCCH group can be used for transmitting the PUCCH, if time units corresponding to different cells have lengths, it cannot be determined whether two PUCCHs are in a same time unit, and therefore it cannot be determined whether the out-of-order data scheduling exists.

Based on this, embodiments of this application provide a communication method. As shown in FIG. 6, a specific procedure of the communication method is described as follows. The method is performed by a terminal device and a network device. The method performed by the terminal device may be performed by the terminal device, or may be performed by a component (for example, a processor, a chip, a circuit, or a chip system) of the terminal device. The method performed by the network device may be performed by the network device, or may be performed by a component (for example, a processor, a chip, a circuit, or a chip system) of the network device. The following describes steps of the method by using an example in which the method is performed by the terminal device and the network device.

S600: The network device generates first scheduling information and second scheduling information.

S601: The network device sends the first scheduling information and the second scheduling information to the terminal device, and correspondingly, the terminal device receives the first scheduling information and the second scheduling information from the network device.

The first scheduling information indicates a time domain resource of a first PDSCH and a time domain resource of a first PUCCH, and the second scheduling information indicates a time domain resource of a second PDSCH and a time domain resource of a second PUCCH. In embodiments of this application, scheduling information may be downlink control information (downlink control information, DCI), the first scheduling information may be denoted as first DCI, and the second scheduling information may be denoted as second DCI. For another example, both the first scheduling information and the second scheduling information are radio resource control (radio resource control, RRC) signaling. Alternatively, the first scheduling information is DCI, and the second scheduling information is RRC signaling. Alternatively, the first scheduling information is RRC signaling, and the second scheduling information is DCI. It should be understood that the first scheduling information and/or the second scheduling information may further include the DCI and the RRC signaling. For example, RRC configures a related parameter of semi-persistent scheduling (semi-persistent scheduling, SPS), for example, a cycle, and then uses the DCI to activate the SPS scheduling. A PDSCH may be scheduled by using the DCI, or may be semi-persistently scheduled.

It should be understood that, that the first scheduling information indicates the time domain resource of the first PDSCH and the time domain resource of the first PUCCH may specifically include: For example, the DCI indicates the time domain resource of the first PDSCH, and the DCI further indicates an interval between the first PDSCH and the first PUCCH, that is, a quantity of time units of an intermediate interval. In the 3GPP protocol, the interval may be an interval between the PDSCH and a HARQ-ACK feedback. Specifically, if the interval is 0, it indicates that the PDSCH and a PUCCH are in a same time unit. Alternatively, when the length of a time unit of a cell for transmitting the PDSCH is transmitted is different from the length of a time unit of a cell for transmitting the PUCCH, one time unit of the cell for transmitting the PDSCH overlaps a plurality of time units of the cell for transmitting the PUCCH. In this case, if the interval is 0, it indicates that the PUCCH is in the last time unit of the plurality of time units that overlap the time unit in which the PDSCH is located. In this case, an index of the time unit in which the PUCCH is located is denoted as X. If the interval is 1, it indicates that the PUCCH is located in a time unit X+1, or rather, located in a time unit after the time unit determined when the interval is 0. If the interval is 2, it indicates that the PUCCH is located in a time unit X+2. The second scheduling information indicates the time domain resource of the second PDSCH and the time domain resource of the second PUCCH in the same manner as the first scheduling information. Details are not described again.

The time domain resource of the second PDSCH is located after the time domain resource of the first PDSCH, or in other words, a start location of the resource of the second PDSCH in time domain is located after an end location of the resource of the first PDSCH in time domain.

The first PUCCH is used to carry HARQ feedback information of the first PDSCH, and the second PUCCH is used to carry HARQ feedback information of the second PDSCH. The HARQ feedback information may specifically include a negative acknowledgement (negative acknowledgement, NACK) or an acknowledgment (acknowledgement, ACK).

The first PUCCH is located in the first cell, and the second PUCCH is located in the second cell. To be specific, if the first PUCCH is transmitted, the first PUCCH is transmitted in the first cell. If the second PUCCH is transmitted, the second PUCCH is transmitted in the second cell. The cell may also be understood as a carrier. To be specific, the first PUCCH is on a first carrier, and the second PUCCH is on a second carrier. One cell may be configured with one carrier, or may be configured with a plurality of carriers. For example, one cell may be configured with both an uplink (uplink, UL) carrier and a supplementary uplink (supplementary uplink, SUL) carri er.

S602: When a condition is met, the terminal device determines that scheduling is incorrect.

The condition may include the following several types. For ease of description, the "condition" in S602 may be separately described as a first condition, a second condition, and a third condition.

The first condition is that the time domain resource of the second PUCCH is located before the time domain resource of the first PUCCH. It may be understood that, as long as the time domain resource of the second PUCCH is located before the time domain resource of the first PUCCH, it is determined that the scheduling is incorrect, and whether the time domain resource of the second PUCCH and the time domain resource of the first PUCCH are located in different time units does not need to be considered. When the time domain resource of the second PUCCH is located before the time domain resource of the first PUCCH, that the terminal device determines that the scheduling is incorrect may also be understood as: The terminal device does not expect the time domain resource of the second PUCCH to be located before the time domain resource of the first PUCCH. The network device should not perform scheduling in this way. To be specific, the time domain resource of the second PUCCH should not be located before the time domain resource of the first PUCCH. In embodiments of this application, the description that "the time domain resource of the second PUCCH is located before the time domain resource of the first PUCCH" may be understood as that an end location of the time domain resource of the second PUCCH is located before a start location of the time domain resource of the first PUCCH, or an end location of the time domain resource of the second PUCCH is located before an end location of the time domain resource of the first PUCCH.

The second condition is that the time domain resource of the first PUCCH and the time domain resource of the second PUCCH are located in different reference time units, and the time domain resource of the second PUCCH is located before the time domain resource of the first PUCCH. When the second condition is met, that the terminal device determines that the scheduling is incorrect may also be understood as: The terminal device does not expect such scheduling, to be specific, does not expect that the time domain resource of the first PUCCH and the time domain resource of the second PUCCH are located in different reference time units and the time domain resource of the second PUCCH is located before the time domain resource of the first PUCCH. The network device should not perform scheduling in this way.

The third condition is that the time domain resource of the first PUCCH and the time domain resource of the second PUCCH are located in one reference time unit. It may be understood that when the time domain resource of the first PUCCH and the time domain resource of the second PUCCH are located in one reference time unit, it is determined that the scheduling is incorrect, and whether the time domain resource of the second PUCCH is located before the time domain resource of the first PUCCH does not need to be considered. When the third condition is met, that the terminal device determines that the scheduling is incorrect may also be understood as: The terminal device does not expect such scheduling, to be specific, does not expect that the time domain resource of the first PUCCH and the time domain resource of the second PUCCH are located in one reference time unit. The network device should not perform scheduling in this way. The third condition may alternatively be understood as that in one reference time unit, the first PUCCH is transmitted in the first cell and the second PUCCH is transmitted in the second cell.

It should be noted that the condition in S602 may be any one or more of the first condition, the second condition, or the third condition. For example, if both the first condition and the third condition are met, as long as "the time domain resource of the second PUCCH is located before the time domain resource of the first PUCCH, and the time domain resource of the first PUCCH and the time domain resource of the second PUCCH are located in one reference time unit", the terminal determines that the scheduling is incorrect.

In S602, when the condition is met, the terminal device determines that the scheduling is incorrect, and the condition may be considered as a condition for determining the scheduling as out-of-order scheduling. The protocol may specify that the foregoing out-of-order scheduling should not occur when the network device schedules a data channel, or that the terminal device does not expect to receive the foregoing out-of-order data scheduling.

Based on this, the foregoing several conditions may also be understood as follows.

Based on the first condition, it may be understood that the network device may schedule the time domain resource of the first PUCCH to be located before the time domain resource of the second PUCCH. This is in-order scheduling, and data is scheduled in order.

Based on the second condition, it may be understood that the network device may perform scheduling in the following manner: The time domain resource of the first PUCCH and the time domain resource of the second PUCCH are located in different reference time units, and the time domain resource of the first PUCCH is located before the time domain resource of the second PUCCH. This is in-order scheduling, and data is scheduled in order. Alternatively, the network device may perform scheduling in the following manner: The time domain resource of the first PUCCH and the time domain resource of the second PUCCH are located in a same reference time unit.

Based on the third condition, it may be understood that the network device may perform scheduling in the following manner: In one reference time unit, only one of the first PUCCH and the second PUCCH is scheduled. The terminal device expects to send the PUCCH in the following manner: In one reference time unit, only one of the first PUCCH and the second PUCCH is sent.

According to the concept of the reference time unit related to the second condition and the third condition, and the length of the reference time unit may be preset. For example, the length of the reference time unit is specified in advance by using a protocol, and the network device and the terminal device store the length of the reference time unit in advance. Alternatively, the length of the reference time unit may be indicated by the network device to the terminal device, for example, may be indicated by using RRC signaling, a MAC control element (control element, CE), or DCI. The length of the reference time unit may be one slot, or may be one subslot. The length of the reference time unit may be N symbols. For example, a value of N may be 2, 7, or 14. The reference time unit may be determined based on the length of time units corresponding to a cell in the cell group, or may be determined based on a subcarrier spacing of a cell in the cell group.

As described above for the concept of the cell group, a PUCCH group includes L cells, only M cells of the L cells are allowed for transmitting the PUCCH, where the M cells form the cell group. With reference to the foregoing embodiment of FIG. 6, the M cells may include the first cell and the second cell, and the network device may schedule the first cell and the second cell in the M cells for transmitting the PUCCH of the terminal device. Both M and L are positive integers, and L is greater than or equal to M. For example, the network device may configure, by using the RRC signaling, information about M cells that are in the PUCCH group and that are allowed for transmitting the PUCCH, and indicate, by using the DCI, the terminal device to transmit the PUCCH in the first cell and the second cell in the M cells.

Each of the M cells corresponds to a time unit for transmitting the PUCCH, and in one time unit for transmitting the PUCCH, only at most one PUCCH carrying the HARQ-ACK information is transmitted in the cell. For example, a cell A in the M cells corresponds to a time unit A for transmitting the PUCCH, and the time unit A includes one or more symbols. One PUCCH or no PUCCH may be transmitted in the time unit A.

The M cells included in the cell group correspond to M time units, and M time units may have a same length or different lengths. The reference time unit may be determined based on the length of a time unit corresponding to a cell in the cell group. In an embodiment, the reference time unit may be a time unit having a smallest length in the M time units. In another embodiment, the reference time unit may be a time unit having a largest length in the M time units. The following describes optional implementations of the embodiment of FIG. 6 based on reference time units of different lengths and with reference to the foregoing second condition.

Because the first PUCCH is located in the first cell, and the second PUCCH is located in the second cell, a time unit corresponding to the first cell may be different from a time unit corresponding to the second cell. In this way, it cannot be determined whether the time domain resource of the first PUCCH and the time domain resource of the second PUCCH are in different time units. In this case, it is inconvenient to define whether the scheduling is out of order. Refer to the definition of the reference time unit. It may be helpful to determine whether the time domain resource of the first PUCCH and the time domain resource of the second PUCCH are in different reference time units. In this way, if the time domain resource of the first PUCCH and the time domain resource of the second PUCCH are located in different reference time units, and the time domain resource of the second PUCCH is located before the time domain resource of the first PUCCH, to be specific, the second condition is met, the terminal device determines that the scheduling is incorrect.

In embodiments of this application, for ease of illustration, the first PDSCH may be represented by a PDSCH 1, the second PDSCH may be represented by a PDSCH 2, the first PUCCH may be represented by a PUCCH 1, and the second PUCCH may be represented by a PUCCH 2. The first scheduling information is represented by DCI 1, and the second scheduling information is represented by DCI 2.

The following uses an example to describe whether the second condition is met with reference to a scenario.

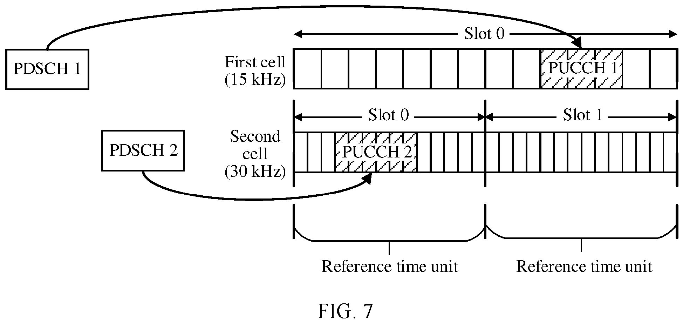

As shown in FIG. 7, it is assumed that the time unit is one slot, a subcarrier spacing of the first cell is 15 kHz, and a subcarrier spacing of the second cell is 30 kHz. In this case, the length of a time unit corresponding to the first cell is twice the length of a time unit corresponding to the second cell. In embodiments of this application, the first cell and the second cell are two cells in the M cells. It is assumed that the reference time unit is a time unit having a smallest time length in the M time units corresponding to the M cells in the cell group, and the time unit having a smallest time length in the M time units is a slot in the subcarrier spacing of 30 kHz. In this case, the length of the reference time unit is the length of one slot of the second cell. A slot 0 of the first cell is aligned with a slot 0 and a slot 1 of the second cell. It can be learned that the time domain resources of the PUCCH 2 and the PUCCH 1 are located in different reference slots, and the time domain resource of the PUCCH 2 is located before the time domain resource of the PUCCH 1. In this way, the scheduling shown in FIG. 7 meets the second condition, and the terminal device determines that the scheduling is incorrect.

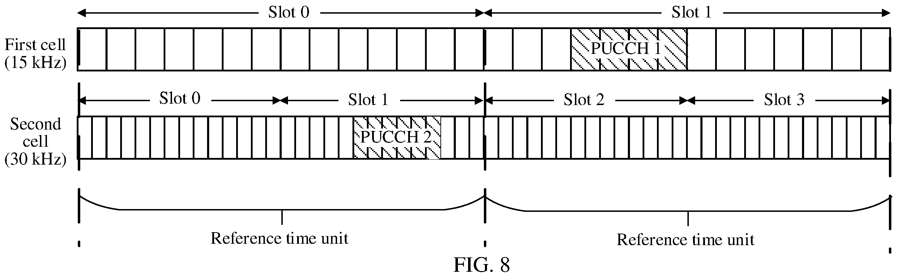

As shown in FIG. 8, it is assumed that the time unit is one slot, the subcarrier spacing of the first cell is 15 kHz, and the subcarrier spacing of the second cell is 30 kHz. It is assumed that the reference time unit is a time unit having a largest time length in the M time units corresponding to the M cells in the cell group, and the time unit having a largest time length in the M time units is a slot in the subcarrier spacing of 15 kHz. In this case, the length of the reference time unit is the length of one slot of the first cell. A slot 0 of the first cell is aligned with a slot 0 and a slot 1 of the second cell. A slot 1 of the first cell is aligned with a slot 2 and a slot 3 of the second cell. It can be learned that the time domain resources of the PUCCH 2 and the PUCCH 1 are located in different reference time units, and the time domain resource of the PUCCH 2 is located before the time domain resource of the PUCCH 1. In this way, the scheduling shown in FIG. 8 meets the second condition, and the terminal device determines that the scheduling is incorrect.

It can be learned that when the reference time unit is a time unit having a smallest length in the M time units, there are more sending opportunities of the PUCCH, and the feedback delay of the HARQ-ACK information is lower. For example, when the network device schedules the time domain resource of the first PUCCH and the time domain resource of the second PUCCH to be located in different reference time units, the time domain resource of the first PUCCH is scheduled to be located before the time domain resource of the second PUCCH. In this way, a cell for transmitting the PUCCH may be switched by using the reference time unit as a granularity. A shorter length of the reference time unit indicates the more sending opportunities of the PUCCH and the lower feedback delay of the HARQ-ACK information. It is assumed that the length of the reference time unit is 0.5 ms, the PUCCH 1 is sent in the first cell in the first 0.5 ms, and the PUCCH 2 is sent in the second cell in the second 0.5 ms. In other words, the cell for sending the PUCCH may be switched at a granularity of 0.5 ms.

The foregoing provides a specific implementation method based on the second condition in a case of two different lengths of the reference time units. The second condition has two conditions. One condition is that the time domain resource of the first PUCCH and the time domain resource of the second PUCCH are located in different reference time units. Under this condition, the location of the time domain resource of the second PUCCH and the location of the time domain resource of the first PUCCH need to be considered. If the time domain resource of the first PUCCH and the time domain resource of the second PUCCH are located in a same reference time unit, an override (override) method may be used to avoid out-of-order, to ensure smooth scheduling, and the override method may also be understood as a PUCCH update method. Specifically, if the time domain resource of the first PUCCH and the time domain resource of the second PUCCH are located in a same reference time unit, the HARQ feedback information of the first PDSCH and the HARQ feedback information of the second PDSCH are carried by using one of the first PUCCH and the second PUCCH that is scheduled later. It should be understood that the HARQ feedback information carried on the PUCCH may be referred to as one HARQ-ACK codebook (codebook). Being scheduled later means that a moment of receiving one piece of DCI that schedules the PUCCH later than a moment of receiving one piece of another DCI. To be specific, a moment of receiving the second DCI is later than a moment of receiving the first DCI. Alternatively, it is understood that an end location of the resource of the physical downlink control channel (physical downlink control channel, PDCCH) carrying the second DCI in time domain is located after an end location of the resource of the PDCCH carrying the first DCI in time domain, or a start location of the resource of the PDCCH carrying the second DCI in time domain is located after a start location of the resource of the PDCCH carrying the first DCI in time domain. When the first PUCCH is a semi-persistently scheduled SPS PUCCH, and the second PUCCH is the PUCCH scheduled by using the DCI, the PUCCH scheduled later is the second PUCCH, that is, the PUCCH scheduled by the DCI. In this case, the PUCCH (that is, the second PUCCH) scheduled by the DCI is used to carry the HARQ feedback information of the semi-persistently scheduled PDSCH (that is, the HARQ feedback information of the first PDSCH) and the HARQ feedback information of the dynamically scheduled PDSCH (that is, the HARQ feedback information of the second PDSCH).

If the PUCCH scheduled later is the second PUCCH, only the second PUCCH is sent, the first PUCCH is not sent, and the HARQ feedback information of the first PDSCH and the HARQ feedback information of the second PDSCH are carried by using the second PUCCH. It may be understood that the second PUCCH overrides the first PUCCH. Because only one of the first PUCCH and the second PUCCH is sent, out-of-order scheduling does not exist.

The following describes an example of the override embodiment with reference to a scenario.

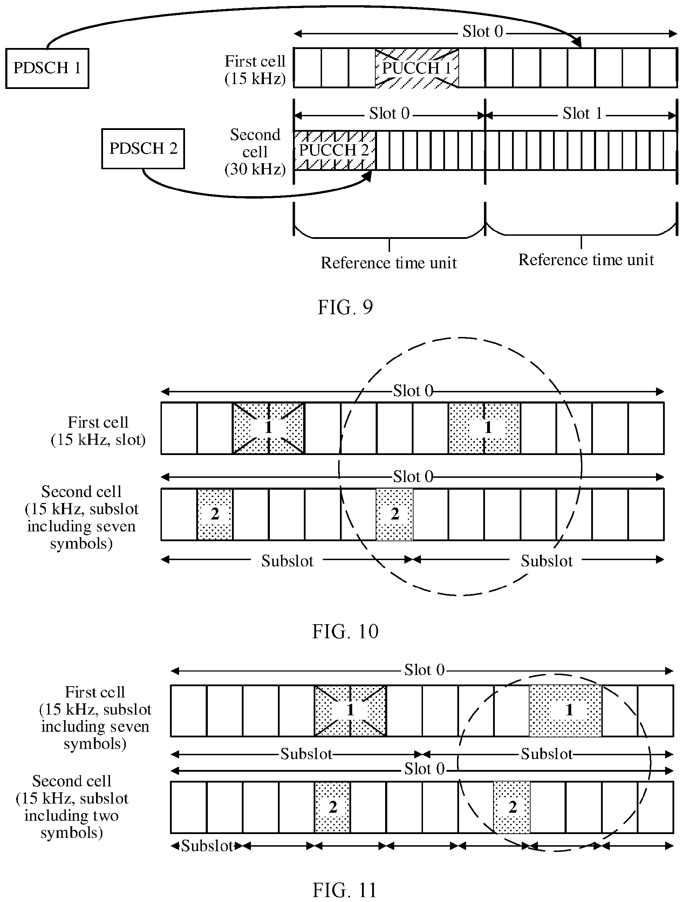

As shown in FIG. 9, it is assumed that the time unit is one slot, the subcarrier spacing of the first cell is 15 kHz, and the subcarrier spacing of the second cell is 30 kHz. It is assumed that the reference time unit is a time unit having a smallest time length in the M time units corresponding to the M cells in the cell group, and the time unit having a smallest time length in the M time units is a slot in the subcarrier spacing of 30 kHz. In this case, the length of the reference time unit is the length of one slot of the second cell. The time domain resource of the PUCCH 2 and time domain resource of the PUCCH 1 are located in a same reference time unit, and the time domain resource of the PUCCH 2 is located before the time domain resource of the PUCCH 1. Because the PUCCH 2 is scheduled later, the HARQ feedback information of the PDSCH 1 and the HARQ feedback information of the PDSCH 2 are carried by using the PUCCH 2, the PUCCH 1 is not sent.

FIG. 9 is described by using an example in which the reference time unit is a time unit having a smallest time length in the M time units corresponding to the M cells. It may be understood that, when the reference time unit is a time unit having a largest time length in the M time units corresponding to the M cells, the foregoing override method may also be used. Details are not described herein again.

It is assumed that in the first PUCCH and the second PUCCH, the second PUCCH is scheduled later. The second condition and the override method are further described below with reference to some scenarios.

As shown in FIG. 10, a time unit corresponding to the first cell is one slot in the subcarrier spacing of 15 kHz, where one slot includes 14 symbols. A time unit corresponding to the second cell is one subslot in the subcarrier spacing of 15 kHz, where the subslot includes seven symbols. In this case, the length of the time unit corresponding to the first cell is twice the length of the time unit corresponding to the second cell. The PUCCH 2 is represented by 2 in FIG. 10, and the PUCCH 1 is represented by 1 in FIG. 10. It is assumed that the reference time unit is a time unit having a smallest time length in the M time units corresponding to the M cells in the cell group, and the time unit having a smallest time length in the M time units is one subslot including seven symbols in the subcarrier spacing of 15 kHz. In this case, the length of the reference time unit is the length of one subslot of the second cell. A slot 0 of the first cell is aligned with two subslots of the second cell.

As shown in FIG. 11, a time unit corresponding to the first cell is a subslot in the subcarrier spacing of 15 kHz, where the subslot includes seven symbols. A time unit corresponding to the second cell is one subslot in the subcarrier spacing of 15 kHz, where the subslot includes two symbols. The PUCCH 2 is represented by 2 in FIG. 11, and the PUCCH 1 is represented by 1 in FIG. 11. It is assumed that the reference time unit is a time unit having a smallest time length in the M time units corresponding to the M cells in the cell group, and the time unit having a smallest time length in the M time units is one subslot including two symbols in the subcarrier spacing of 15 kHz. In this case, the length of the reference time unit is the length of one subslot of the second cell.

With reference to FIG. 10 and FIG. 11, an example is displayed outside the circle, and another example is displayed inside the circle. In an example, the time domain resource of the PUCCH 2 and the time domain resource of the PUCCH 1 are located in a same reference time unit, to be specific, the time domain resource of the PUCCH 2 is located in a subslot of the second cell. The location of the time domain resource of the PUCCH 1 is included in time that overlaps one subslot of the second cell. In this case, the override method is used. The HARQ feedback information of the PDSCH 1 and the HARQ feedback information of the PDSCH 2 are transmitted by using the PUCCH 2, and the PUCCH 1 is not sent. In this way, even if the time domain resource of the PUCCH 2 is located before the time domain resource of the PUCCH 1, because the PUCCH 1 is not sent, the out-of-order data scheduling does not exist. In another example, the time domain resource of the PUCCH 2 and the time domain resource of the PUCCH 1 are located in different reference time units, and the time domain resource of the PUCCH 2 is located before the time domain resource of the PUCCH 1. In this way, the second condition is met, the scheduling is out of order, that is, the scheduling is incorrect.

In the foregoing scenarios, both the time domain resource of the first PUCCH and the time domain resource of the second PUCCH are located in one reference time unit, or the time domain resource of the first PUCCH and the time domain resource of the second PUCCH are located in different reference time units. In some scenarios, only a part of the time domain resource of the PUCCH is located in one reference time unit, and the other part is located in another reference time unit. To be specific, the time domain resource of the PUCCH crosses two reference time units. For ease of description, the PUCCH that crosses reference time units may be denoted as a third PUCCH. The third PUCCH that crosses reference time units may also be considered that a start symbol and an end symbol of a time domain resource of the third PUCCH are located in two different reference time units. In this case, a reference time unit in which the start symbol of the time domain resource of the third PUCCH is located may be used as a reference time unit in which the time domain resource of the third PUCCH is located, or a reference time unit in which the end symbol of the time domain resource of the third PUCCH is located is used as a reference time unit in which the time domain resource of the third PUCCH is located. Both the time domain resource of the first PUCCH and the time domain resource of the second PUCCH may cross reference time units. When the time domain resource of the first PUCCH crosses reference time units, a reference time unit in which a start symbol of the time domain resource of the first PUCCH is located may be used as a reference time unit in which the time domain resource of the first PUCCH is located, or a reference time unit in which an end symbol of the time domain resource of the first PUCCH is located is used as a reference time unit in which the time domain resource of the first PUCCH is located. When the time domain resource of the second PUCCH crosses reference time units, a reference time unit in which a start symbol of the time domain resource of the second PUCCH is located may be used as a reference time unit in which the time domain resource of the second PUCCH is located, or a reference time unit in which an end symbol of the time domain resource of the second PUCCH is located is used as a reference time unit in which the time domain resource of the second PUCCH is located. The reference time units in which the time domain resource of the first PUCCH and the time domain resource of the second PUCCH are located may be determined by using a same rule. For example, both the time domain resource of the first PUCCH and the time domain resource of the second PUCCH meet the following condition: The reference time unit in which the start symbol of the time domain resource of the PUCCH is located is used as the reference time unit in which the time domain resource of the PUCCH is located. For another example, both the time domain resource of the first PUCCH and the time domain resource of the second PUCCH meet the following condition: The reference time unit in which the end symbol of the time domain resource of the PUCCH is located is used as the reference time unit in which the time domain resource of the PUCCH is located.

In addition, in addition to the start symbol and the end symbol, a reference time unit in which any specified symbol of the time domain resource of the third PUCCH is located may be used as the reference time unit in which the time domain resource of the third PUCCH is located.

The following provides an example of a cross-reference time unit scenario.

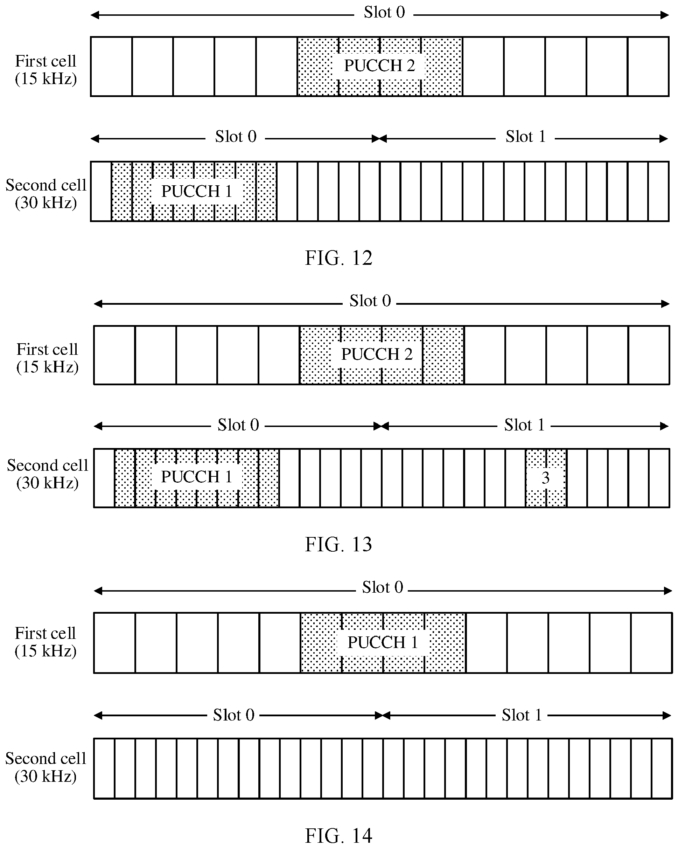

As shown in FIG. 12, it is assumed that the time unit is one slot, and the subcarrier spacing of the first cell is 15 kHz. The subcarrier spacing of the second cell is 30 kHz. It is assumed that the reference time unit is a time unit having a smallest time length in the M time units corresponding to the M cells in the cell group, and the time unit having a smallest time length in the M time units is a slot in the subcarrier spacing of 30 kHz. In this case, the length of the reference time unit is the length of one slot of the second cell. When the time domain resource of the PUCCH 2 crosses the slot 0 and the slot 1 of the second cell, and the reference time unit in which the start symbol of the time domain resource of the PUCCH 2 is located may be used as the reference time unit in which the time domain resource of the PUCCH 2 is located. In other words, it is considered that the time domain resource of the PUCCH 2 is located in the reference time unit corresponding to the slot 0 of the second cell. In this case, the time domain resource of the PUCCH 2 and the time domain resource of the PUCCH 1 are located in a same reference time unit. If the reference time unit in which the end symbol of the time domain resource of the PUCCH 2 is located is used as the reference time unit in which the time domain resource of the PUCCH 2 is located, and the time domain resource of the PUCCH 2 is located in the reference time unit corresponding to the slot 1 of the second cell, the time domain resource of the PUCCH 2 and the time domain resource of the PUCCH 1 are located in different reference time units. Further, the override method may be used based on the condition that the time domain resource of the PUCCH 2 and the time domain resource of the PUCCH 1 are located in a same reference time unit Alternatively, if the time domain resource of the PUCCH 2 and the time domain resource of the PUCCH 1 are located in different reference time units, when the time domain resource of the PUCCH 2 is located before the time domain resource of the PUCCH 1, the second condition is met, that is, the scheduling is incorrect; when the time domain resource of the PUCCH 2 is located after the time domain resource of the PUCCH 1, the scheduling is in order, that is, the scheduling is correct.

As shown in FIG. 13, on the basis of the embodiment of FIG. 12, it is assumed that a PUCCH 3 is further transmitted in the slot 1 of the second cell, and a scheduling sequence is as follows: the PUCCH 1, the PUCCH 2, and the PUCCH 3. The PUCCH 3 is represented by 3 in FIG. 13. The time domain resource of the PUCCH 2 crosses the slot 0 and the slot 1 of the second cell. If the reference time unit in which the start symbol of the time domain resource of the PUCCH 2 is located is used as the reference time unit in which the time domain resource of the PUCCH 2 is located. In other words, it is considered that when the time domain resource of the PUCCH 2 is located in the reference time unit corresponding to the slot 0 of the second cell, the time domain resource of the PUCCH 2 and the time domain resource of the PUCCH 1 are located in a same reference time unit, the PUCCH 2 is scheduled later than the PUCCH 1, the PUCCH 2 overrides the PUCCH 1, only the PUCCH 2 is sent, and the PUCCH 1 is not sent. If only the PUCCH 3 exists in the slot 1 of the second cell, the PUCCH 3 needs to be sent. If the reference time unit in which the end symbol of the time domain resource of the PUCCH 2 is located is used as the reference time unit in which the time domain resource of the PUCCH 2 is located. In other words, it is considered that the time domain resource of the PUCCH 2 is located in the reference time unit corresponding to the slot 1 of the second cell. In this case, the time domain resource of the PUCCH 2 and a time domain resource of the PUCCH 3 are located in the same reference time unit, the PUCCH 3 is scheduled later than the PUCCH 2, the PUCCH 3 overrides the PUCCH 2, only the PUCCH 3 is sent, and the PUCCH 2 is not sent. If only the PUCCH 1 exists in the slot 0 of the second cell, the PUCCH 1 needs to be sent.

The foregoing describes a solution to a case in which the time domain resource of the PUCCH crosses reference time units. More generally, a time domain resource of a PUCCH in one cell may cross a time unit of another cell, that is, a cross-time unit scenario. The cross-time unit refers to a time unit that crosses one cell, and is not the reference time unit in the foregoing descriptions. If a time domain resource of a PUCCH in one cell crosses time units of another cell, the PUCCH cannot be sent in the two time units that are crossed of another cell. For example, as shown in FIG. 14, it is assumed that the time unit is one slot, the subcarrier spacing of the first cell is 15 kHz, and the subcarrier spacing of the second cell is 30 kHz. If the time domain resource of the PUCCH 1 is located in the slot 0 and the slot 1 of the second cell, the slot 0 and the slot 1 of the second cell are not allowed for sending the PUCCH. In this case, the PUCCH 2 can be sent only in a next slot not crossed in the second cell. It may be understood that when the PUCCH is sent in a time unit (for example, denoted as a first time unit) corresponding to a cell, the PUCCH is not allowed to be sent in a time unit that is of another cell and that overlaps the first time unit. The overlap may be understood as partial overlap in time domain or complete overlap in time domain.

Based on the cross-time unit scenario, an additional rule is required. In an embodiment, it may be specified that the time domain resource of the PUCCH is not allowed to cross a time unit, or the network device is not allowed to schedule a time domain resource of a PUCCH of a cell to cross two time units of another cell. From a perspective of the terminal device, the terminal device does not expect that a time domain resource of a PUCCH in a cell overlaps two time units of another cell. With reference to the embodiment of FIG. 6, the time domain resource of the first PUCCH should not be in two time units of the second cell, and the time domain resource of the second PUCCH should not be in two time units of the first cell. If the start symbol and the end symbol of the time domain resource of the first PUCCH are located in different reference time units, or if the start symbol and the end symbol of the time domain resource of the second PUCCH are located in different reference time units, it is determined that the scheduling is incorrect.

The following describes optional implementations of the embodiment of FIG. 6 based on reference time units of different lengths and with reference to the foregoing third condition.

The third condition is that the time domain resource of the first PUCCH and the time domain resource of the second PUCCH are located in one reference time unit. In an embodiment, the reference time unit may be a time unit having a largest length in the M time units. In one reference time unit, as long as both the first PUCCH and the second PUCCH are scheduled in the same reference time unit, it is considered that the scheduling is incorrect. The network device does not allow such scheduling, and the terminal device does not expect such scheduling. In other words, the terminal device does not expect that the time domain resource of the first PUCCH and the time domain resource of the second PUCCH are located in one reference time unit. In one reference time unit, the PUCCH is allowed to be sent only in one cell. The terminal device does not expect to transmit the PUCCH in different cells in one reference time unit, and the network device is not allowed to schedule, in one reference time, the PUCCH transmitted in different cells.

Several scenarios of the embodiment of FIG. 6 are described below by using examples with reference to the third condition and based on that the reference time unit is the time unit having the largest length in the M time units.

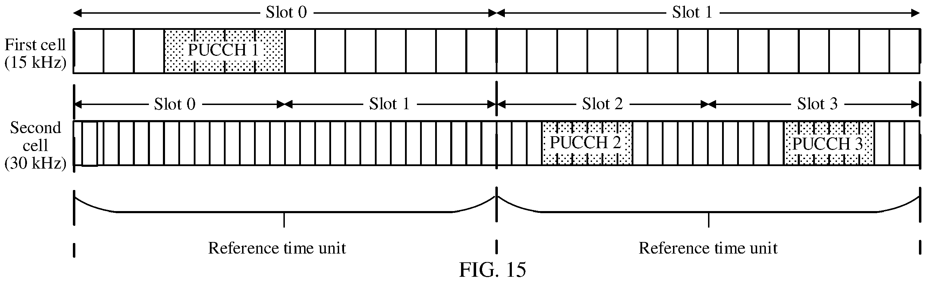

As shown in FIG. 15, it is assumed that the time unit is one slot, the subcarrier spacing of the first cell is 15 kHz, and the subcarrier spacing of the second cell is 30 kHz. It is assumed that the reference time unit is a time unit having a largest time length in the M time units corresponding to the M cells in the cell group, and the time unit having a largest time length in the M time units is a slot in the subcarrier spacing of 15 kHz. In this case, the length of the reference time unit is the length of one slot of the first cell. A slot 0 of the first cell is aligned with a slot 0 and a slot 1 of the second cell. A slot 1 of the first cell is aligned with a slot 2 and a slot 3 of the second cell. In FIG. 15, in one reference time unit corresponding to the slot 0 of the first cell, the terminal device does not expect to further send the PUCCH 2 in the second cell on a basis that the PUCCH 1 is sent in the first cell. In one reference time unit corresponding to the slot 1 of the first cell, the terminal device does not expect to further send the PUCCH 1 in the first cell on a basis that the PUCCH 2 is sent in the second cell. To be specific, in one reference time unit, the terminal device does not expect switching of a PUCCH transmission cell. If in one reference time unit, the first PUCCH is transmitted in the first cell and the second PUCCH is transmitted in the second cell, it is considered that the scheduling is incorrect.

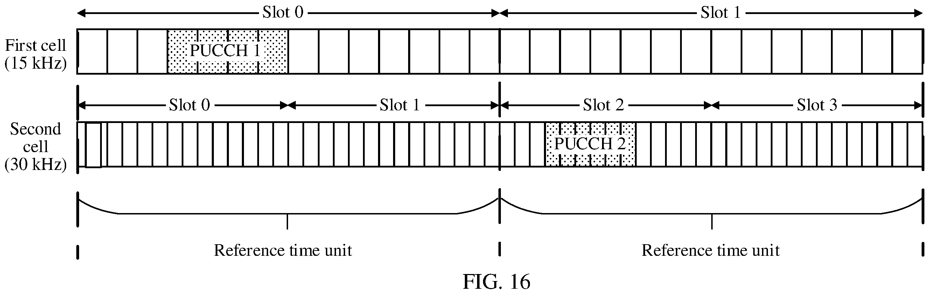

It can be learned from FIG. 15 that, in one reference time unit, the PUCCH may be sent in two time units in the second cell. Certainly, the PUCCH may also be sent in one time unit in the second cell. In embodiments of this application, in another application scenario other than the embodiment of FIG. 15, one or more PUCCHs may be sent in one cell in one reference time unit. Based on this, in a possible design, the terminal device may also send PUCCH quantity information to the network device, where the PUCCH quantity information indicates a maximum quantity of PUCCHs that are sent in a reference time unit and that are used to carry HARQ-ACK information. For example, it may be specified that only a maximum of one PUCCH used to carry the HARQ-ACK information can be sent in one reference time unit. Based on the embodiment of FIG. 15, when it is specified that a maximum of one PUCCH is sent in one reference time unit, as shown in FIG. 16, only one PUCCH may be sent in the second cell in the reference time unit corresponding to the slot 1 of the first cell. It should be understood that the PUCCH quantity information may be a capability of the terminal device, and the terminal device may notify the network device of the information by using signaling for reporting the capability.

Based on the embodiment of FIG. 6, this application may further provide an optional implementation method. The terminal device may send capability information to the network device, where the capability information may include the PUCCH quantity information and/or cell quantity information. The PUCCH quantity information indicates a maximum quantity of PUCCHs that are sent in one reference time unit and that are used to carry the HARQ-ACK information. The quantity information of the cell may indicate a maximum quantity of cells for transmitting the PUCCH in one reference time unit. Certainly, transmitting the PUCCH herein refers to transmitting the PUCCH used to carry the HARQ-ACK information.

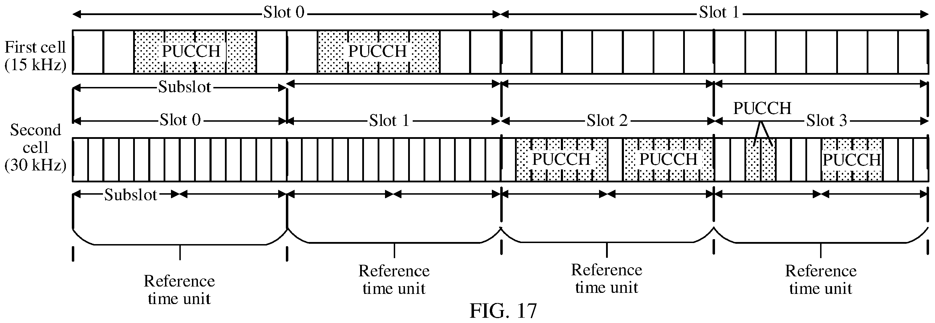

As shown in FIG. 17, a time unit corresponding to the first cell is a subslot including seven symbols in the subcarrier spacing of 15 kHz, and a time unit corresponding to the second cell is a subslot including seven symbols in the subcarrier spacing of 30 kHz. It is assumed that the reference time unit is a time unit having a largest time length in the M time units corresponding to the M cells in the cell group, and the time unit having a largest length in the M time units is a subslot in the subcarrier spacing of 15 kHz. In this case, the length of the reference time unit is the length of one subslot of the first cell. In FIG. 17, in one reference time unit corresponding to the first subslot of the first cell, the terminal device sends the PUCCH only in the first cell; in one reference time unit corresponding to the second subslot of the first cell, the terminal device sends the PUCCH only in the first cell; in one reference time unit corresponding to the third subslot of the first cell, the terminal device sends the PUCCH only in the second cell; in one reference time unit corresponding to the fourth subslot of the first cell, the terminal device sends the PUCCH only in the second cell. Similarly, in one reference time unit, the terminal device does not expect switching of a PUCCH transmission cell. If in one reference time unit, the first PUCCH is transmitted in the first cell and the second PUCCH is transmitted in the second cell, it is considered that the scheduling is incorrect.

The third condition is that the time domain resource of the first PUCCH and the time domain resource of the second PUCCH are located in one reference time unit. In another embodiment, the reference time unit may be a time unit having a smallest length in the M time units. In one reference time unit, as long as both the first PUCCH and the second PUCCH are scheduled in the same reference time unit, it is considered that the scheduling is incorrect. The network device does not allow such scheduling, and the terminal device does not expect such scheduling. In one reference time unit, the PUCCH is allowed to be sent only in one cell. The terminal device does not expect to transmit the PUCCH in different cells in one reference time unit, and the network device is not allowed to schedule, in one reference time, the PUCCH transmitted in different cells. Based on the third condition, in one reference time unit, the PUCCH is allowed to be transmitted only in one cell. It may be understood that, based on a constraint of the third condition, the network device is allowed to schedule, in one reference time unit, the PUCCH transmitted in only one cell, or based on a constraint of the third condition, the terminal device expects to transmit the PUCCH only in one cell. Under constraint scheduling of the third condition, if the PUCCH is scheduled to be transmitted in different cells in one reference time unit, an override method may be used. For a specific override method, refer to the foregoing descriptions. Alternatively, under constraint scheduling of the third condition, if the PUCCH is sent only in one cell in one reference time unit, whether the scheduling is incorrect may be determined with reference to the second condition or the first condition. For the first condition or the second condition, refer to related descriptions in this specification. Details are not described herein again.

Scenarios of the embodiment of FIG. 6 are described below by using examples with reference to the third condition and based on that the reference time unit is the time unit having a smallest length in the M time units.

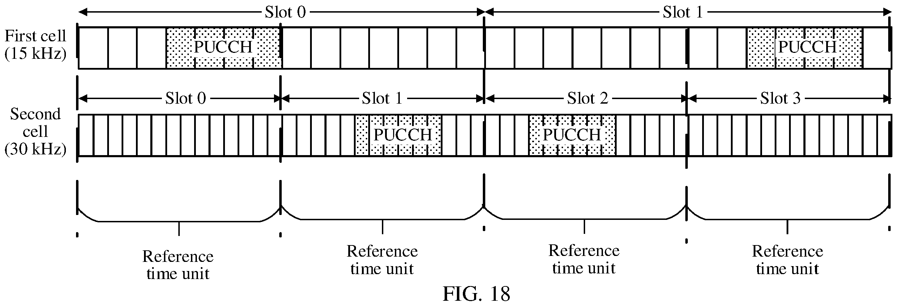

As shown in FIG. 18, it is assumed that the time unit is one slot, the subcarrier spacing of the first cell is 15 kHz, and the subcarrier spacing of the second cell is 30 kHz. It is assumed that the reference time unit is a time unit having a smallest time length in the M time units corresponding to the M cells in the cell group, and the time unit having a smallest length in the M time units is a slot in the subcarrier spacing of 15 kHz. In this case, the length of the reference time unit is the length of one slot of the first cell. In FIG. 18, in one reference time unit corresponding to the slot 0 of the second cell, the terminal device does not expect to further send the PUCCH in the second cell on a basis that the PUCCH is sent in the first cell. In one reference time unit corresponding to the slot 1 of the second cell, the terminal device does not expect to further send the PUCCH in the first cell on a basis that the PUCCH is sent in the second cell. In other words, in one reference time unit corresponding to the slot 0 of the second cell, the terminal device sends the PUCCH only in the first cell, and does not send the PUCCH in the second cell; in one reference time unit corresponding to the slot 1 of the second cell, the terminal device sends the PUCCH only in the second cell, and does not send the PUCCH in the first cell; in one reference time unit corresponding to a slot 2 of the second cell, the terminal device sends the PUCCH only in the second cell, and does not send the PUCCH in the first cell; in one reference time unit corresponding to a slot 3 of the second cell, the terminal device sends the PUCCH only in the first cell, and does not send the PUCCH in the second cell. To be specific, in one reference time unit, the terminal device does not expect switching of a PUCCH transmission cell. If in one reference time unit, the first PUCCH is transmitted in the first cell and the second PUCCH is transmitted in the second cell, it is considered that the scheduling is incorrect.

So far, the descriptions of various embodiments of the second condition and the third condition have been completed.

The following describes optional implementations with reference to an embodiment corresponding to the first condition.

The first condition is that the time domain resource of the second PUCCH is located before the time domain resource of the first PUCCH. Whether the time domain resource of the second PUCCH and the time domain resource of the first PUCCH are in different time units is not considered. The time unit of the second cell and the time unit of the first cell may have a same length or different lengths.

The following uses an example to describe whether the first condition is met with reference to a scenario.

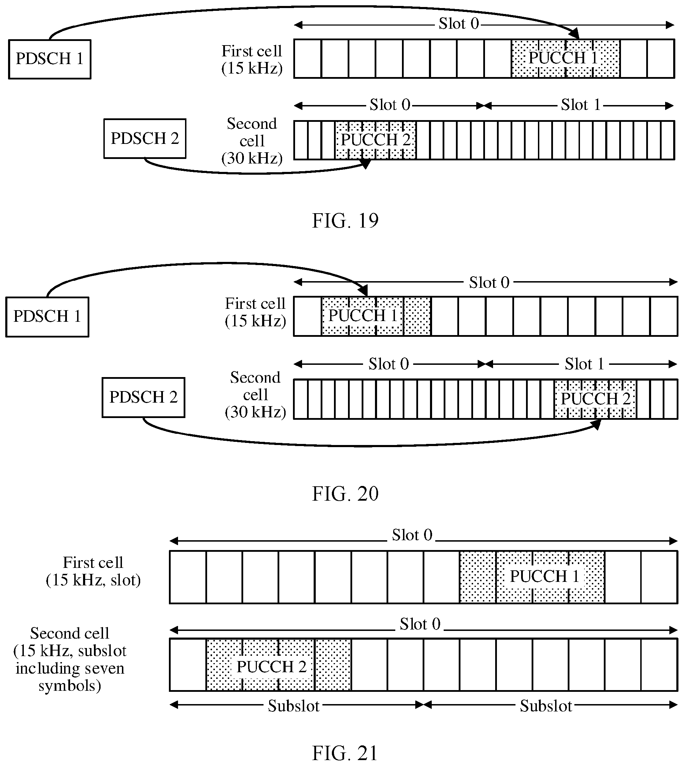

In a scenario, a subcarrier spacing of the first cell is different from a subcarrier spacing of the second cell, time units of both the first cell and the second cell are slots, and a quantity of symbols included in one slot is the same. The time unit corresponding to the first cell is one slot in the subcarrier spacing of 15 kHz, where one slot includes 14 symbols. The time unit corresponding to the second cell is one slot in the subcarrier spacing of 30 kHz, where one slot includes 14 symbols. The length of the time unit corresponding to the first cell is twice the length of the time unit corresponding to the second cell. Based on this scenario, as shown in FIG. 19, the time domain resource of the PUCCH 2 is located before the time domain resource of the PUCCH 1. When the scheduling shown in FIG. 19 meets the first condition, the terminal device determines that the scheduling is incorrect. As shown in FIG. 20, if the time domain resource of the PUCCH 2 is located after the time domain resource of the PUCCH 1, the first condition is not met, the scheduling is normal, and the in-order scheduling is met.

In another scenario, a subcarrier spacing of the first cell is the same as a subcarrier spacing of the second cell. However, a time unit of the first cell is different from a time unit of the second cell.

As shown in FIG. 21, the time unit corresponding to the first cell is one slot in the subcarrier spacing of 15 kHz, and the time unit corresponding to the second cell is one slot including seven symbols in the subcarrier spacing of 15 kHz. In FIG. 21, the time domain resource of the PUCCH 2 is located before the time domain resource of the PUCCH 1. When the scheduling shown in FIG. 21 meets the first condition, the terminal device determines that the scheduling is incorrect.

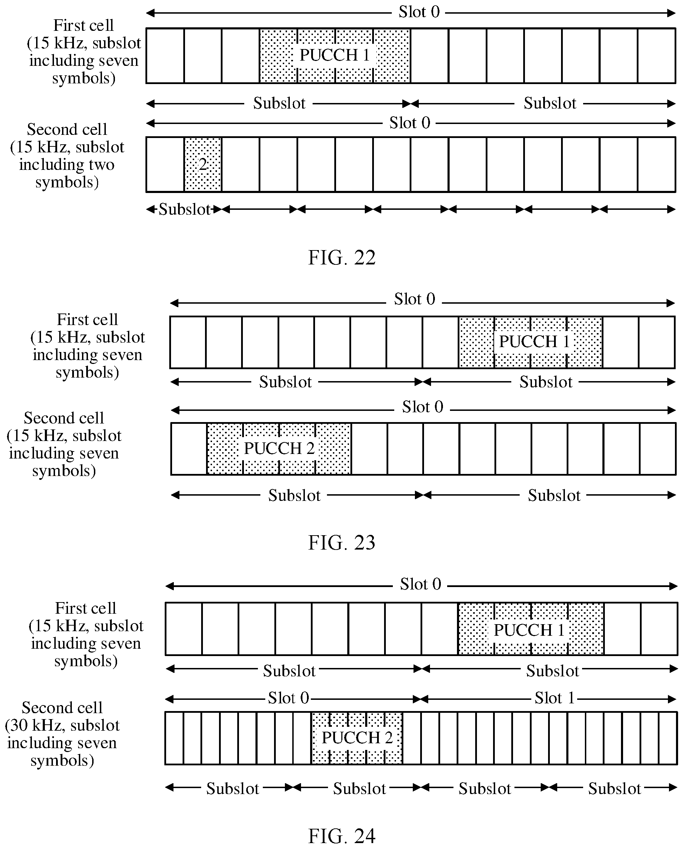

As shown in FIG. 22, the time unit corresponding to the first cell is one subslot including seven symbols in the subcarrier spacing of 15 kHz, and the time unit corresponding to the second cell is one subslot including seven symbols in the subcarrier spacing of 15 kHz. In FIG. 22, the PUCCH 2 is represented by 2. The time domain resource of the PUCCH 2 is located before the time domain resource of the PUCCH 1. When the scheduling shown in FIG. 22 meets the first condition, the terminal device determines that the scheduling is incorrect.

As shown in FIG. 23, the time unit corresponding to the first cell is one subslot including seven symbols in the subcarrier spacing of 15 kHz, and the time unit corresponding to the second cell is one subslot including seven symbols in the subcarrier spacing of 15 kHz. The length of the time unit corresponding to the first cell is the same as the length of the time unit corresponding to the second cell. In FIG. 23, the time domain resource of the PUCCH 2 is located before the time domain resource of the PUCCH 1. When the scheduling shown in FIG. 23 meets the first condition, the terminal device determines that the scheduling is incorrect.

In still another scenario, a subcarrier spacing of the first cell is different from a subcarrier spacing of the second cell, time units of both the first cell and the second cell are subslots, and a quantity of symbols included in one slot is also the same.

As shown in FIG. 24, the time unit corresponding to the first cell is one subslot in the subcarrier spacing of 15 kHz, where one subslot includes seven symbols. The time unit corresponding to the second cell is one subslot in the subcarrier spacing of 30 kHz, where one subslot includes seven symbols. The length of the time unit corresponding to the first cell is twice the length of the time unit corresponding to the second cell. The time domain resource of the PUCCH 2 is located before the time domain resource of the PUCCH 1. When the scheduling shown in FIG. 24 meets the first condition, the terminal device determines that the scheduling is incorrect.

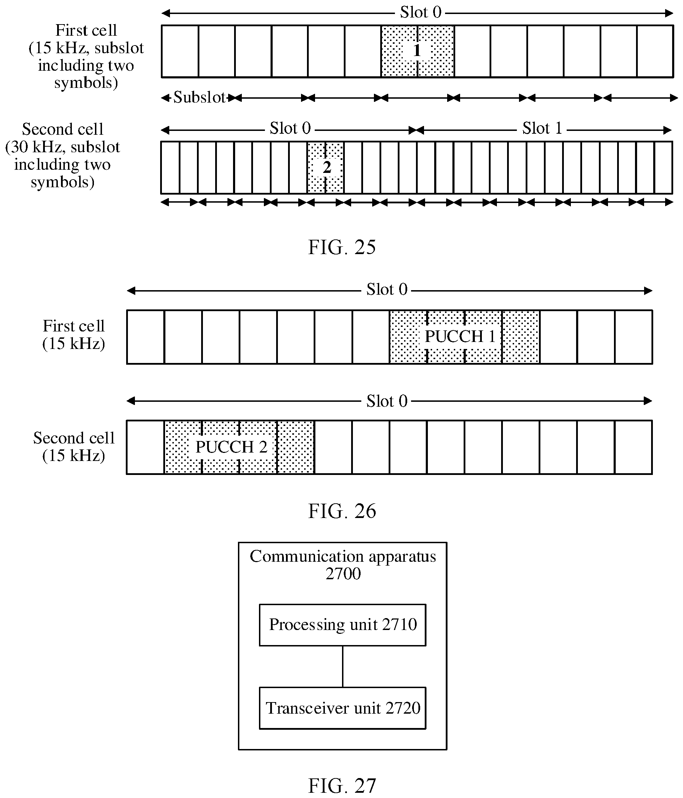

As shown in FIG. 25, the time unit corresponding to the first cell is one subslot in the subcarrier spacing of 15 kHz, where one subslot includes two symbols. The time unit corresponding to the second cell is one subslot in the subcarrier spacing of 30 kHz, where one subslot includes two symbols. The length of the time unit corresponding to the first cell is twice the length of the time unit corresponding to the second cell. The time domain resource of the PUCCH 2 is located before the time domain resource of the PUCCH 1. When the scheduling shown in FIG. 25 meets the first condition, the terminal device determines that the scheduling is incorrect.

In still another scenario, a subcarrier spacing of the first cell is the same as a subcarrier spacing of the second cell, time units of both the first cell and the second cell are slots, and a quantity of symbols included in one slot is the same. The time unit corresponding to the first cell is one slot in the subcarrier spacing of 15 kHz, where one slot includes 14 symbols. The time unit corresponding to the second cell is one slot in the subcarrier spacing of 15 kHz, where one slot includes 14 symbols. The length of the time unit corresponding to the first cell is the same as the length of the time unit corresponding to the second cell. Based on this scenario, as shown in FIG. 26, when the time domain resource of the PUCCH 2 is located before the time domain resource of the PUCCH 1, that is, the first condition is met, the terminal device determines that the scheduling is incorrect. In other words, in one time unit, when the time domain resource of the PUCCH 2 is located before the time domain resource of the PUCCH 1, the terminal device determines that the scheduling is incorrect. It may also be understood that, in one reference time unit, when the time domain resource of the PUCCH 2 is located before the time domain resource of the PUCCH 1, the terminal device determines that the scheduling is incorrect. In this case, the PUCCH 2 does not override the PUCCH 1, to be specific, override between PUCCHs can be performed only in one cell, and cannot be performed between cells.

In the foregoing embodiments, the terminal device may be scheduled to transmit, in two cells, the PUCCH carrying the HARQ-ACK information. It may be understood that, the terminal device may be further scheduled to transmit, in more cells, the PUCCH carrying the HARQ-ACK information. For a transmission rule or a method, refer to a method used in two cells. It may be considered that the first cell and the second cell are any two cells in a plurality of scheduled cells.

Optionally, in embodiments of this application, PUCCHs used to carry the HARQ-ACK information in different cells do not overlap in time domain.

It may be understood that, to implement the functions in the foregoing embodiments, the network device and the terminal device include corresponding hardware structures and/or software modules for performing the functions. Persons skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

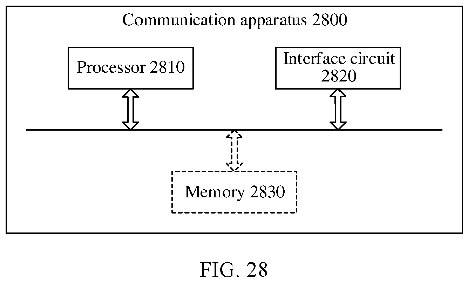

FIG. 27 and FIG. 28 are schematic diagrams of structures of possible communication apparatuses according to embodiments of this application. These communication apparatuses may be configured to implement a function of the terminal device or the network device in the foregoing method embodiments, and thus can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (such as a chip) applied to the terminal or the base station.

As shown in FIG. 27, a communication apparatus 2700 includes a processing unit 2710 and a transceiver unit 2720. The communication apparatus 2700 is configured to implement a function of the terminal device or the network device in the method embodiment shown in FIG. 6.

When the communication apparatus 2700 is configured to implement the function of the terminal device in the method embodiment shown in FIG. 6, the transceiver unit 2720 is configured to receive first scheduling information and second scheduling information from the network device. The processing unit 2710 is configured to determine that scheduling is incorrect when a condition is met.

When the communication apparatus 2700 is configured to implement the function of the network device in the method embodiment shown in FIG. 6, the processing unit 2710 is configured to generate the first scheduling information and the second scheduling information, and the transceiver unit 2720 is configured to send the first scheduling information and second scheduling information to the terminal device.

For more detailed descriptions of the processing unit 2710 and the transceiver unit 2720, directly refer to related descriptions in the method embodiment shown in FIG. 6. Details are not described herein again.

As shown in FIG. 28, a communication apparatus 2800 includes a processor 2810 and an interface circuit 2820. The processor 2810 and the interface circuit 2820 are coupled to each other. It may be understood that the interface circuit 2820 may be a transceiver or an input/output interface. Optionally, the communication apparatus 2800 may further include a memory 2830, configured to store instructions executed by the processor 2810, or store input data needed by the processor 2810 to run the instructions, or store data generated after the processor 2810 runs the instructions.

When the communication apparatus 2800 is configured to implement the method shown in FIG. 6, the processor 2810 is configured to implement a function of the processing unit 2710, and the interface circuit 2820 is configured to implement a function of the transceiver unit 2720.

When the foregoing communication apparatus is a chip applied to the terminal device, the chip in the terminal device implements functions of the terminal device in the foregoing method embodiments. The chip in the terminal device receives information from another module (for example, a radio frequency module or an antenna) in the terminal device, where the information is sent by the network device to the terminal device, or the chip in the terminal device sends information to another module (for example, a radio frequency module or an antenna) in the terminal device, where the information is sent by the terminal device to the network device.

When the communication apparatus is a module applied to the network device, the network device module implements the function of the network device in the foregoing method embodiments. The network device module receives information from another module (for example, a radio frequency module or an antenna) in the network device, where the information is sent by the terminal to the network device, or the network device module sends information to another module (for example, a radio frequency module or an antenna) in the network device, where the information is sent by the network device to the terminal. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to a processor, so that the processor can read information from the storage medium or write information into the storage medium. Certainly, the storage medium may be a component of the processor. The processor and the storage medium may be located in the ASIC. In addition, the ASIC may be located in a base station or the terminal. Certainly, the processor and the storage medium may alternatively exist in the base station or the terminal as discrete components.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are implemented. The computer may be a general-purpose computer, a special-purpose computer, a computer network, a network device, user equipment, or another programmable apparatus. The computer program or the instructions may be stored in a computer-readable storage medium or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state disk. The computer-readable storage medium may be a volatile or nonvolatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and represents that three relationships may exist. For example, A and/or B may indicate the following three cases: Only A exists, both A and B exist, and only B exists. A and B may be singular or plural.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

## Claims

1. A communication method, comprising:
receiving first scheduling information and second scheduling information from a network device, wherein the first scheduling information indicates a time domain resource of a first physical downlink shared channel PDSCH and a time domain resource of a first physical uplink control channel PUCCH, the second scheduling information indicates a time domain resource of a second PDSCH and a time domain resource of a second PUCCH, the time domain resource of the second PDSCH is located after the time domain resource of the first PDSCH, the first PUCCH is used to carry hybrid automatic repeat request-acknowledgment HARQ feedback information of the first PDSCH, the second PUCCH is used to carry HARQ feedback information of the second PDSCH, the first PUCCH is located in a first cell, and the second PUCCH is located in a second cell; and
determining that scheduling is incorrect when a condition is met, wherein the condition is that the time domain resource of the second PUCCH is located before the time domain resource of the first PUCCH; or the time domain resource of the first PUCCH and the time domain resource of the second PUCCH are located in different reference time units, and the time domain resource of the second PUCCH is located before the time domain resource of the first PUCCH; or the time domain resource of the first PUCCH and the time domain resource of the second PUCCH are located in one reference time unit, wherein a length of the reference time unit is preset or indicated by the network device.

2. The method according to claim 1, wherein
the reference time unit is a time unit having a smallest length in M time units corresponding to M cells comprised in a cell group, wherein the cell group comprises the first cell and the second cell, each cell comprised in the cell group is a cell allowed for transmitting a PUCCH, and M is a positive integer.

3. The method according to claim 1, wherein
the reference time unit is a time unit having a largest length in M time units corresponding to M cells comprised in a cell group, wherein the cell group comprises the first cell and the second cell, each cell comprised in the cell group is a cell allowed for transmitting a PUCCH, and M is a positive integer.

4. The method according to any one of claims 1 to 3, wherein the method further comprises: when the time domain resource of the first PUCCH and the time domain resource of the second PUCCH are located in a same reference time unit, using one of the first PUCCH and the second PUCCH that is scheduled later to carry the HARQ feedback information of the first PDSCH and the HARQ feedback information of the second PDSCH.

5. The method according to any one of claims 1 to 3, wherein the method comprises:
if a start symbol and an end symbol of a time domain resource of a third PUCCH are located in two different reference time units, using a reference time unit in which the start symbol of the time domain resource of the third PUCCH is located as a reference time unit in which the time domain resource of the third PUCCH is located; or using a reference time unit in which the end symbol of the time domain resource of the third PUCCH is located as a reference time unit in which the time domain resource of the third PUCCH is located, wherein the third PUCCH is the first PUCCH or the second PUCCH.

6. The method according to any one of claims 1 to 3, wherein the method comprises:
if a start symbol and an end symbol of the time domain resource of the first PUCCH are located in different reference time units, and/or if a start symbol and an end symbol of the time domain resource of the second PUCCH are located in different reference time units, determining that the scheduling error occurs.

7. The method according to any one of claims 1 to 6, wherein the method further comprises:
sending PUCCH quantity information to the network device, wherein the PUCCH quantity information indicates a maximum quantity of PUCCHs that are sent in a reference time unit and that are used to carry the HARQ-ACK feedback information.

8. A communication apparatus, comprising:
a transceiver unit, configured to receive first scheduling information and second scheduling information from a network device, wherein the first scheduling information indicates a time domain resource of a first physical downlink shared channel PDSCH and a time domain resource of a first physical uplink control channel PUCCH, the second scheduling information indicates a time domain resource of a second PDSCH and a time domain resource of a second PUCCH, the time domain resource of the second PDSCH is located after the time domain resource of the first PDSCH, the first PUCCH is used to carry hybrid automatic repeat request-acknowledgment HARQ feedback information of the first PDSCH, the second PUCCH is used to carry HARQ feedback information of the second PDSCH, the first PUCCH is located in a first cell, and the second PUCCH is located in a second cell; and
a processing unit, configured to determine that scheduling is incorrect when a condition is met, wherein the condition is that the time domain resource of the second PUCCH is located before the time domain resource of the first PUCCH; or the time domain resource of the first PUCCH and the time domain resource of the second PUCCH are located in different reference time units, and the time domain resource of the second PUCCH is located before the time domain resource of the first PUCCH; or the time domain resource of the first PUCCH and the time domain resource of the second PUCCH are located in one reference time unit, wherein a length of the reference time unit is preset or indicated by the network device.

9. The apparatus according to claim 8, wherein the reference time unit is a time unit having a smallest length in M time units corresponding to M cells comprised in a cell group, wherein the cell group comprises the first cell and the second cell, each cell comprised in the cell group is a cell allowed for transmitting a PUCCH, and M is a positive integer.

10. The apparatus according to claim 8, wherein the reference time unit is a time unit having a largest length in M time units corresponding to M cells comprised in a cell group, wherein the cell group comprises the first cell and the second cell, each cell comprised in the cell group is a cell allowed for transmitting a PUCCH, and M is a positive integer.

11. The apparatus according to any one of claims 8 to 10, wherein the processing unit is further configured to:
when the time domain resource of the first PUCCH and the time domain resource of the second PUCCH are located in a same reference time unit, use one of the first PUCCH and the second PUCCH that is scheduled later to carry the HARQ feedback information of the first PDSCH and the HARQ feedback information of the second PDSCH.

12. The apparatus according to any one of claims 8 to 10, wherein if a start symbol and an end symbol of a time domain resource of a third PUCCH are located in two different reference time units, a reference time unit in which the start symbol of the time domain resource of the third PUCCH is located is used as a reference time unit in which the time domain resource of the third PUCCH is located; or a reference time unit in which the end symbol of the time domain resource of the third PUCCH is located is used as a reference time unit in which the time domain resource of the third PUCCH is located, wherein the third PUCCH is the first PUCCH or the second PUCCH.

13. The apparatus according to any one of claims 8 to 10, wherein if a start symbol and an end symbol of the time domain resource of the first PUCCH are located in different reference time units, and/or if a start symbol and an end symbol of the time domain resource of the second PUCCH are located in different reference time units, it is determined that the scheduling is incorrect.

14. The apparatus according to any one of claims 8 to 13, wherein the transceiver unit is further configured to:
send PUCCH quantity information to the network device, wherein the PUCCH quantity information indicates a maximum quantity of PUCCHs that are sent in a reference time unit and that are used to carry the HARQ-ACK feedback information.

15. A communication apparatus, comprising a module configured to perform the method according to any one of claims 1 to 7.

16. A communication apparatus, comprising a processor and an interface circuit, wherein the interface circuit is configured to: receive a signal from a communication apparatus other than the communication apparatus, and transmit the signal to the processor; or send a signal from the processor to a communication apparatus other than the communication apparatus; and the processor is configured to implement the method according to any one of claims 1 to 7 by using a logic circuit or by executing code instructions.

17. A computer-readable storage medium, wherein the storage medium stores a computer program or instructions, and when the computer program is executed or the instructions are executed by a communication apparatus, the method according to any one of claims 1 to 7 is implemented.

18. A computer program product, wherein the computer program product stores computer-readable instructions, and when the computer-readable instructions are run, the method according to any one of claims 1 to 7 is performed.

19. A chip, wherein the chip is coupled to a memory, and is configured to read and execute program instructions stored in the memory, to perform the method according to any one of claims 1 to 7.

## Amended claims

### Amended claims under Art. 19.1 PCT

1. A communication method, comprising:
receiving first scheduling information and second scheduling information from a network device, wherein the first scheduling information indicates a time domain resource of a first physical downlink shared channel PDSCH and a time domain resource of a first physical uplink control channel PUCCH, the second scheduling information indicates a time domain resource of a second PDSCH and a time domain resource of a second PUCCH, the time domain resource of the second PDSCH is located after the time domain resource of the first PDSCH, the first PUCCH is used to carry hybrid automatic repeat request-acknowledgment HARQ feedback information of the first PDSCH, the second PUCCH is used to carry HARQ feedback information of the second PDSCH, the first PUCCH is located in a first cell, and the second PUCCH is located in a second cell; and
determining that scheduling is incorrect when a condition is met, wherein the condition is that the time domain resource of the second PUCCH is located before the time domain resource of the first PUCCH; or the time domain resource of the first PUCCH and the time domain resource of the second PUCCH are located in different reference time units, and the time domain resource of the second PUCCH is located before the time domain resource of the first PUCCH; or the time domain resource of the first PUCCH and the time domain resource of the second PUCCH are located in one reference time unit, wherein a length of the reference time unit is preset or indicated by the network device.

2. The method according to claim 1, wherein
the reference time unit is a time unit having a smallest length in M time units corresponding to M cells comprised in a cell group, wherein the cell group comprises the first cell and the second cell, each cell comprised in the cell group is a cell allowed for transmitting a PUCCH, and M is a positive integer.

3. The method according to claim 1, wherein
the reference time unit is a time unit having a largest length in M time units corresponding to M cells comprised in a cell group, wherein the cell group comprises the first cell and the second cell, each cell comprised in the cell group is a cell allowed for transmitting a PUCCH, and M is a positive integer greater than 1.

4. The method according to any one of claims 1 to 3, wherein
both the first scheduling information and the second scheduling information are downlink control information DCI;
the first scheduling information is DCI, and the second scheduling information comprises the DCI and radio resource control RRC signaling; or
the second scheduling information is DCI, and the first scheduling information comprises the DCI and RRC signaling.

5. The method according to any one of claims 1 to 4, wherein a length of a time unit corresponding to the second cell is different from a length of a time unit corresponding to the first cell, and the time unit is a slot.

6. The method according to any one of claims 1 to 3, wherein the method further comprises: when the time domain resource of the first PUCCH and the time domain resource of the second PUCCH are located in a same reference time unit, using one of the first PUCCH and the second PUCCH that is scheduled later to carry the HARQ feedback information of the first PDSCH and the HARQ feedback information of the second PDSCH.

7. The method according to any one of claims 1 to 3, wherein the method comprises:
if a start symbol and an end symbol of a time domain resource of a third PUCCH are located in two different reference time units, using a reference time unit in which the start symbol of the time domain resource of the third PUCCH is located as a reference time unit in which the time domain resource of the third PUCCH is located; or using a reference time unit in which the end symbol of the time domain resource of the third PUCCH is located as a reference time unit in which the time domain resource of the third PUCCH is located, wherein the third PUCCH is the first PUCCH or the second PUCCH.

8. The method according to any one of claims 1 to 3, wherein the method comprises:
if a start symbol and an end symbol of the time domain resource of the first PUCCH are located in different reference time units, and/or if a start symbol and an end symbol of the time domain resource of the second PUCCH are located in different reference time units, determining that the scheduling error occurs.

9. The method according to any one of claims 1 to 6, wherein the method further comprises:
sending PUCCH quantity information to the network device, wherein the PUCCH quantity information indicates a maximum quantity of PUCCHs that are sent in a reference time unit and that are used to carry the HARQ-ACK feedback information.

10. A communication apparatus, comprising:
a transceiver unit, configured to receive first scheduling information and second scheduling information from a network device, wherein the first scheduling information indicates a time domain resource of a first physical downlink shared channel PDSCH and a time domain resource of a first physical uplink control channel PUCCH, the second scheduling information indicates a time domain resource of a second PDSCH and a time domain resource of a second PUCCH, the time domain resource of the second PDSCH is located after the time domain resource of the first PDSCH, the first PUCCH is used to carry hybrid automatic repeat request-acknowledgment HARQ feedback information of the first PDSCH, the second PUCCH is used to carry HARQ feedback information of the second PDSCH, the first PUCCH is located in a first cell, and the second PUCCH is located in a second cell; and
a processing unit, configured to determine that scheduling is incorrect when a condition is met, wherein the condition is that the time domain resource of the second PUCCH is located before the time domain resource of the first PUCCH; or the time domain resource of the first PUCCH and the time domain resource of the second PUCCH are located in different reference time units, and the time domain resource of the second PUCCH is located before the time domain resource of the first PUCCH; or the time domain resource of the first PUCCH and the time domain resource of the second PUCCH are located in one reference time unit, wherein a length of the reference time unit is preset or indicated by the network device.

11. The apparatus according to claim 10, wherein the reference time unit is a time unit having a smallest length in M time units corresponding to M cells comprised in a cell group, wherein the cell group comprises the first cell and the second cell, each cell comprised in the cell group is a cell allowed for transmitting a PUCCH, and M is a positive integer.

12. The apparatus according to claim 10, wherein the reference time unit is a time unit having a largest length in M time units corresponding to M cells comprised in a cell group, wherein the cell group comprises the first cell and the second cell, each cell comprised in the cell group is a cell allowed for transmitting a PUCCH, and M is a positive integer greater than 1.

13. The apparatus according to any one of claims 10 to 12, wherein
both the first scheduling information and the second scheduling information are downlink control information DCI;
the first scheduling information is DCI, and the second scheduling information comprises the DCI and radio resource control RRC signaling; or
the second scheduling information is DCI, and the first scheduling information comprises the DCI and RRC signaling.

14. The apparatus according to any one of claims 10 to 13, wherein a length of a time unit corresponding to the second cell is different from a length of a time unit corresponding to the first cell, and the time unit is a slot.

15. The apparatus according to any one of claims 10 to 12, wherein the processing unit is further configured to:
when the time domain resource of the first PUCCH and the time domain resource of the second PUCCH are located in a same reference time unit, use one of the first PUCCH and the second PUCCH that is scheduled later to carry the HARQ feedback information of the first PDSCH and the HARQ feedback information of the second PDSCH.

16. The apparatus according to any one of claims 10 to 12, wherein if a start symbol and an end symbol of a time domain resource of a third PUCCH are located in two different reference time units, a reference time unit in which the start symbol of the time domain resource of the third PUCCH is located is used as a reference time unit in which the time domain resource of the third PUCCH is located; or a reference time unit in which the end symbol of the time domain resource of the third PUCCH is located is used as a reference time unit in which the time domain resource of the third PUCCH is located, wherein the third PUCCH is the first PUCCH or the second PUCCH.

17. The apparatus according to any one of claims 10 to 12, wherein if a start symbol and an end symbol of the time domain resource of the first PUCCH are located in different reference time units, and/or if a start symbol and an end symbol of the time domain resource of the second PUCCH are located in different reference time units, it is determined that the scheduling is incorrect.

18. The apparatus according to any one of claims 10 to 17, wherein the transceiver unit is further configured to:
send PUCCH quantity information to the network device, wherein the PUCCH quantity information indicates a maximum quantity of PUCCHs that are sent in a reference time unit and that are used to carry the HARQ-ACK feedback information.

19. A communication apparatus, comprising a module configured to perform the method according to any one of claims 1 to 9.

20. A communication apparatus, comprising a processor and an interface circuit, wherein the interface circuit is configured to: receive a signal from a communication apparatus other than the communication apparatus, and transmit the signal to the processor; or send a signal from the processor to a communication apparatus other than the communication apparatus; and the processor is configured to implement the method according to any one of claims 1 to 9 by using a logic circuit or by executing code instructions.

21. A computer-readable storage medium, wherein the storage medium stores a computer program or instructions, and when the computer program is executed or the instructions are executed by a communication apparatus, the method according to any one of claims 1 to 9 is implemented.

22. A computer program product, wherein the computer program product stores computer-readable instructions, and when the computer-readable instructions are run, the method according to any one of claims 1 to 9 is performed.

23. A chip, wherein the chip is coupled to a memory, and is configured to read and execute program instructions stored in the memory, to perform the method according to any one of claims 1 to 9.
